# EUROPEAN PATENT APPLICATION

(11) **EP 1 347 606 A1**
(43) Date of publication of application: **24.09.2003**
(21) Application number: 03006010.7
(22) Date of filing: 18.03.2003
(51) Int. Cl.: H04L 12/58

(54) **Message-server, message system, and method of management of presence information**

(30) Priority: 18.03.2002 JP 2002073825
(71) Applicant: NEC CORPORATION, Tokyo (JP)
(72) Inventor: Sakata, Kazuhiro, c/oNEC Corporation, Tokyo (JP)
(74) Representative: Glawe, Delfs, Moll & Partner

(57) **Abstract**

A method and system for management of a presence information by a message server. A presence information of at least one member listed on each communication group member list belonging to each user is notified. A presence information is renewed, which belongs to a terminal of a user as sender who sends a message to the message server. The presence information is automatically renewed in response to at least one of a first type event that the message server has received at least one of the message and any other communication from the user as sender, and a second type event that an effective time period for the presence information has expired.

## Description

The present invention relates to a message server and a message system as well as a method of management of a presence information and a computer-readable program for implementing a presence information management.

All of patents, patent applications, patent publications, scientific articles and the like, which will hereinafter be cited or identified in the present application, will, hereby, be incorporated by references in their entirety in order to describe more fully the state of the art, to which the present invention pertains.

In recent years, an instant messaging service has been on the wide spread as one of the currently available Internet services. Similarly to the existent and known e-mail services, this instant messaging service allows bidirectional transmissions and/or receptions of messages via the Internet between plural clients or users. The instant messaging service is, however, different from the existent e-mail services in view that the instant messaging service further allows that a list of group members for communications has previously been registered onto a server, to which the messaging service is provided, so that the transmissions and/or receptions of messages may be made with recognizing a state of a communication counter-part, to which the communication is made. The list of group members for communications will, hereinafter, be referred to as "communication group member list". An information of a current or present state of the communication counter-part is generally so called as "presence information". The presence information may take at least two kinds of value or state. The kind of value or state for the presence information may optionally be adjusted for each of the message systems.

It is, hereby, assumed that there are two states of presence informations, for example, the first is "on-line" which represents a communication enable state, and the second is "off-line" which represents a communication unable state. This allows recognizing whether the present state of each of the communication group members is "on-line" or "off-line". This recognition allows one or more messages to be transmitted to one or more selected communication group members as communication counter-parts who are presently placed in the communication enable state or the "on-line" state.

It is also, hereby, assumed that two users "A" and "B" use the instant messaging server, wherein the user "B" is included in a communication group member list registered on the server by the user "A". In this case, for the purpose of enabling the user "A" to recognize the presence information of the user "B", it is necessary to conduct two processes, for example, a presence recognizing process for making the server recognize the presence information at the present of the user "B" and a presence notifying process for notifying or informing the user "A" of the recognized presence information of the user "B".

### (1) presence recognizing process :

One example of the conventional presence recognizing processes will be described. The user "B" operates his or her terminal device so that the presence of the user "B" is set "on-line" when the terminal device of the user "B" is in the communication enable state, and the presence of the user "B" is set "off-line" when the terminal device of the user "B" is in the communication unable state, and also that the server periodically send the terminal device of the user "B" of an inquiry for the presence information of the user "B", and the terminal device of the user "B" responds to the server's inquiry for the presence information of the user "B". If the server receives no response to the inquiry from the terminal device of the user "B", then the server recognizes that the presence of the user "B" is "off-line".

Another example of the conventional presence recognizing processes will be described. Similarly to the last-mentioned processes, the server periodically send the terminal device of the user "B" of an inquiry for the presence information of the user "B", and the terminal device of the user "B" responds to the server's inquiry for the presence information of the user "B". Notwithstanding, the user "B" operates a key board of the terminal device to select plural ones of previously-given kinds of presence informations, for example, "presence", "absence" and "busy", which may be displayed on a display screen or to enter user's optional characters or sentences, for example, "I will be out until 14:00" as the presence information. Still another example of the conventional processes is that the user "B" renews the presence information and then voluntarily notifies the sever of the renewed presence information.

### (2) presence notifying process :

One example of the conventional presence notifying processes for notifying the user "A" of the current state of the presence information of the user "B" is that upon request of the user "A" or periodically, the terminal device of the user "A" sends the server an inquiry for the presence information about the user "B" who is included in the communication group member list of the user "A", and then the server responds to this inquiry for the current presence information about the user "B".

Another example of the conventional presence notifying processes is that upon any change to the presence information of the user "B" registered on the server, the sever sends the terminal device of the user "A" the changed presence information of the user "B", provided that the user "B" is included in the communication group member list of the user "A".

Even if the above-described presence notifying process is made at a high frequency or plural different methods for notifying the presence information are used in combination, the presence information of the user "B" is not so informational or useful to the user "A" as long as the presence recognition process is not so effective. Assuming that the presence information of the user "B" is set "on-line" or "off-line" based on the "power-on" or "power-off" state of the terminal device of the user "B", the server will, then, notify the presence information "on-line" or "off-line" about the user "B" to the user "A" based on the server's recognition of the "power-on" or "power-off" state of the terminal device of the user "B". In case that the terminal device of the user "B" is a portable terminal device, such as a mobile telephone device, the terminal device of the user "B" might be in the "power-on" state, even the user "B" does not carry the terminal device. In this case, the presence information "on-line" or "off-line" about the user "B" is not informational or useful to the user "A".

In order to settle the above problem, it is necessary that the user "B" operates the terminal device to enter the optional characters or sentences which indicates the presence information of the user "B". This entry operation might be unwelcome and inconvenient to the user "B". It is almost impossible that the above entry operation is welcome and convenient to all of the serves.

Consequently, all of the above-described applicant's admitted prior arts are unable to ensure that the presence recognition process is effective at anytime, unless the user intentionally operate the terminal device for entry of the optional characters or sentences which indicates the presence information of this user. This means that the intended value of the instant messaging service is insufficiently or incompletely available. In the above circumstances, the development of a novel technique free from the above problems is desirable.

Accordingly, it is an object of the present invention to provide a novel message server free from the above problems.

It is a further object of the present invention to provide a novel message server allowing an increased effectiveness of the presence recognition process without any further load to the user and also increased value and availability of the instant messaging service.

It is another object of the present invention to provide a novel message server which automatically renews the presence information of the user every times when the server transmits any message, thereby allowing an increased effectiveness of the presence recognition process without any further load to the user and also increased value and availability of the instant messaging service.

It is still another object of the present invention to provide a novel message server which automatically renews the presence information of the user when a time period previously set for the presence information expires, thereby allowing an increased effectiveness of the presence recognition process without any further load to the user and also increased value and availability of the instant messaging service.

It is a still further object of the present invention to provide a novel message system free from the above problems.

It is yet a further object of the present invention to provide a novel message system allowing an increased effectiveness of the presence recognition process without any further load to the user and also increased value and availability of the instant messaging service.

It is another object of the present invention to provide a novel message system which automatically renews the presence information of the user every times when the server transmits any message, thereby allowing an increased effectiveness of the presence recognition process without any further load to the user and also increased value and availability of the instant messaging service.

It is still another object of the present invention to provide a novel message system which automatically renews the presence information of the user when a time period previously set for the presence information expires, thereby allowing an increased effectiveness of the presence recognition process without any further load to the user and also increased value and availability of the instant messaging service.

It is further more object of the present invention to provide a novel method of managing the presence information free from the above problems.

It is moreover object of the present invention to provide a novel method of managing the presence information, for allowing an increased effectiveness of the presence recognition process without any further load to the user and also increased value and availability of the instant messaging service.

It is another object of the present invention to provide a novel method of managing the presence information, which automatically renews the presence information of the user every times when the server transmits any message, thereby allowing an increased effectiveness of the presence recognition process without any further load to the user and also increased value and availability of the instant messaging service.

It is still another object of the present invention to provide a novel method of managing the presence information, which automatically renews the presence information of the user when a time period previously set for the presence information expires, thereby allowing an increased effectiveness of the presence recognition process without any further load to the user and also increased value and availability of the instant messaging service.

It is still more object of the present invention to provide a novel program for implementing the presence information management free from the above problems.

It is yet more object of the present invention to provide a novel program for implementing the presence information management, for allowing an increased effectiveness of the presence recognition process without any further load to the user and also increased value and availability of the instant messaging service.

It is another object of the present invention to provide a novel program for implementing the presence information management, which automatically renews the presence information of the user every times when the server transmits any message, thereby allowing an increased effectiveness of the presence recognition process without any further load to the user and also increased value and availability of the instant messaging service.

It is still another object of the present invention to provide a novel program for implementing the presence information management, which automatically renews the presence information of the user when a time period previously set for the presence information expires, thereby allowing an increased effectiveness of the presence recognition process without any further load to the user and also increased value and availability of the instant messaging service.

The present invention provides a method and a system for management of a presence information by a message server. A presence information of at least one member listed on each communication group member list belonging to each user is notified. A presence information is renewed, which belongs to a terminal of a user as sender who sends a message to the message server. The presence information is automatically renewed in response to at least one of a first type event that the message server has received at least one of the message and any other communication from the user as sender, and a second type event that an effective time period for the presence information has expired.

The above and other objects, features and advantages of the present invention will be apparent from the following descriptions.

Preferred embodiments according to the present invention will be described in detail with reference to the accompanying drawings.
FIG. 1 is a block diagram illustrative of a schematic configuration of a message system in a first embodiment in accordance with the present invention.
FIG. 2 is a view of one example of the member informations stored in the user information storage unit in the first embodiment in accordance with the present invention.
FIG 3 is a view illustrative of one example of the presence renewal control information set on the presence renewal control information storage unit in the first embodiment in accordance with the present invention.
FIG 4 is a flow chart illustrative of registration operations of registering the user's IDs and the communication group member lists onto the server from the client in the first embodiment in accordance with the present invention.
FIG. 5 is a view illustrative of one example of the communication group member list managed in the communication group member list management unit in the first embodiment in accordance with the present invention.
FIG. 6 is a flow chart illustrative of an example of operations of the message system for transmission and receipt of one or more messages between the clients through the server in the first embodiment in accordance with the present invention.
FIG. 7 is a flow chart illustrative of renewal operations made by the presence information renewal unit of the server to the member informations of all the users registered on the user information storage unit of the server in the first embodiment in accordance with the present invention.
FIG. 8 is a flow chart illustrative of one example of sequential operations made by the message system for notifying or informing the client of the respective presence informations of the respective users, which are stored and managed in the user information storage unit in the server in the first embodiment in accordance with the present invention.
FIG 9 is a flow chart illustrative of another example of sequential operations made by the message system for notifying or informing the client of the respective presence informations of the respective users, which are stored and managed in the user information storage unit in the server in the first embodiment in accordance with the present invention.
FIG 10 is a flow chart illustrative of still another example of notifying or informing the respective presence informations when the server has received any message from any client in the first embodiment in accordance with the present invention.
FIG. 11 a block diagram illustrative of a schematic configuration of a message system in a second embodiment in accordance with the present invention.
FIG. 12 is a flow chart illustrative of sequential operations of registering the user's IDs and the communication group member lists as well as respective unique presence renewal control informations onto the server from the client in the second embodiment in accordance with the present invention.
FIG. 13 is a view of one example of the member informations stored in the user information storage unit with the extension unit in the second embodiment in accordance with the present invention.
FIG. 14 is a flow chart illustrative of an example of operations of the message system for transmission and receipt of one or more messages between the clients through the server in the second embodiment in accordance with the present invention.
FIG 15 is a flow chart illustrative of renewal operations made by the presence information renewal unit of the server to the member informations of all the users registered on the user information storage unit of the server in the second embodiment in accordance with the present invention.
FIG. 16 is a block diagram illustrative of a schematic configuration of a message system in a third embodiment in accordance with the present invention.
FIG. 17 is a flow chart illustrative of registration operations of registering the user's IDs and the communication group member lists onto the server from the client in the third embodiment in accordance with the present invention.
FIG. 18 is a view of one example of the member informations stored in the user information storage unit with the extension unit in the third embodiment in accordance with the present invention.
FIG. 19 is a flow chart illustrative of operations of the present message system when the user of the terminal device communicates to the server through the telephone device and the Web browser in the third embodiment in accordance with the present invention.
FIG. 20 is a block diagram illustrative of a schematic configuration of a message system in a fourth embodiment in accordance with the present invention.
FIG 21 is a view illustrative of one example of the first, second and third presence renewal control informations which have been set on the first, second and third presence renewal control information storage units in the fourth embodiment in accordance with the present invention.
FIG. 22 is a view of one example of the member informations stored in the user information storage unit with the extension unit in the fourth embodiment in accordance with the present invention.
FIG. 23 is a flow chart illustrative of an example of operations of the message system for transmission and receipt of one or more messages between the clients through the server in the fourth embodiment in accordance with the present invention.
FIG. 24 is a flow chart illustrative of operations of the present message system when the user of the terminal device communicates to the server through the telephone device and the Web browser in the fourth embodiment in accordance with the present invention.
FIG. 25 is a flow chart illustrative of renewal operations made by the presence information renewal unit of the server to the member informations of all the users registered on the user information storage unit of the server in the fourth embodiment in accordance with the present invention.
FIG. 26 a block diagram illustrative of a schematic configuration of a message system in a fifth embodiment in accordance with the present invention.
FIG. 27 is a view illustrative of one example of the presence renewal control information set on the presence renewal control information storage unit in the fifth embodiment in accordance with the present invention.
FIG 28 is a view of one example of the member informations stored in the user information storage unit in the fifth embodiment in accordance with the present invention.
FIG. 29 is a flow chart illustrative of sequential operations of renewing the presence information based on the user's designated presence information in the fifth embodiment in accordance with the present invention.
FIG. 30 is a flow chart illustrative of an example of operations of the message system for transmission and receipt of one or more messages between the clients through the server in the fifth embodiment in accordance with the present invention.
FIG. 31 is a view of one example of the member informations stored in the user information storage unit in a sixth embodiment in accordance with the present invention.
FIG. 32 is a flow chart illustrative of sequential operations of renewing the presence information based on the user's designated presence information in the sixth embodiment in accordance with the present invention.
FIG. 33 is a view of one example of the member informations stored in the user information storage unit in a seventh embodiment in accordance with the present invention.
FIG 34 is a flow chart illustrative of sequential operations of renewing the presence information based on the user's designated presence information in the seventh embodiment in accordance with the present invention.
FIG 35 is a flow chart illustrative of renewal operations made by the presence information renewal unit of the server to the member informations of all the users registered on the user information storage unit of the server in the seventh embodiment in accordance with the present invention.
FIG 36 a block diagram illustrative of a schematic configuration of a message system in the eighth embodiment in accordance with the present invention.
FIG 37 is a view of one example of the member informations stored in the user information storage unit in the eighth embodiment in accordance with the present invention.
FIG. 38 is a flow chart illustrative of an example of operations of the message system for transmission and receipt of one or more messages between the clients through the server in the eighth embodiment in accordance with the present invention.
FIG 39 is a flow chart illustrative of renewal operations made by the presence information renewal unit of the server to the member informations of all the users registered on the user information storage unit of the server in the eighth embodiment in accordance with the present invention.
FIG 40 is a view of one example of the member informations stored in the user information storage unit in a ninth embodiment in accordance with the present invention.
FIG 41 is a flow chart illustrative of renewal operations made by the presence information renewal unit of the server to the member informations of all the users registered on the user information storage unit of the server in the ninth embodiment in accordance with the present invention.

A first aspect of the present invention is a message server including : a message delivery unit for delivering a message between terminals of users ; a user-related information storage unit for storing each presence information of each terminal of each user and each communication group member list belonging to the each user ; a user-related information management unit for notifying a presence information of at least one member, who is listed on the each communication group member list, to the each terminal of the each user ; and a presence information renewal unit for renewing a presence information, which belongs to a terminal of a user as sender who sends a message to the message server, and which is stored in the user-related information storage unit, wherein the presence information renewal unit renews the presence information automatically in response to at least one of a first type event that the message server has received at least one of the message and any other communication from the user as sender, and a second type event that an effective time period for the presence information has expired.

It is possible that the user-related information management unit further renews a presence information of a terminal of a user as renewal requester who has sent a request for renewal of the presence information in response to receipt of the request for renewal from the user as renewal requester.

It is also possible that the user-related information management unit furthermore sets an effective time period for the presence information as renewed by the user-related information management unit, so that the presence information, as once renewed, is further renewed when the effective time period has expired.

It is also possible that the user-related information management unit receives the effective time period together with the request for renewal from the terminal of the user as renewal requester.

It is also possible that the user-related information management unit receives next-renewal contents of the presence information in addition to the request for renewal from the user as renewal requester, where the next-renewal contents are to be used for a next-renewal to be made in response to the second type event based on the next-renewal contents subsequent to a currently requested renewal by the request for renewal.

It is also possible to further include : a presence renewal control information storage unit for storing : renewal contents for renewing a presence information based on the renewal contents in response to the first type event ; the effective time period for the presence information as renewed ; and next-renewal contents for renewing the presence information, as once renewed, in response to the second type event, wherein the renewal contents, the effective time period, and the next-renewal contents are common to the terminals of all the users.

It is also possible that the user-related information storage unit stores renewal contents for renewing a presence information based on the renewal contents in response to the first type event ; the effective time period for the presence information as renewed ; and next-renewal contents for renewing the presence information, as once renewed, in response to the second type event, wherein the renewal contents, the effective time period, and the next-renewal contents are unique to each of the terminals of all the users.

It is also possible that the user-related information management unit does not set any effective time period for a presence information as renewed by the user-related information management unit based on the request for renewal from the user as renewal requester.

It is also possible that the user-related information management unit sets an effective time period for a presence information as renewed by the user-related information management unit based on the request for renewal from the user as renewal requester, and where the effective time period is designated by the request for renewal.

It is also possible that the user-related information management unit sets an effective time period for a presence information as renewed by the user-related information management unit based on the request for renewal from the user as renewal requester, and where the effective time period is designated by the request for renewal, and the user-related information management unit further sets next-renewal contents for further renewing the presence information as renewed based on the next-renewal contents at the second time when the effective time period as set for the presence information as renewed has expired.

It is also possible that the any other communication from the user as sender includes at least one of a first type access from a telephone device to the message server and a second type access from a Web-browser to the message server.

It is also possible to further include : a first presence renewal control information storage unit for storing a first presence renewal control information to be used for renewing a presence information in response to the first type event that the server receives the message ; a second presence renewal control information storage unit for storing a second presence renewal control information to be used for renewing the presence information in response to the first type event that the server receives the first type access from the telephone device ; and a third presence renewal control information storage unit for storing a third presence renewal control information to be used for renewing the presence information in response to the first type event that the server receives the second type access from the Web-browser.

It is also possible that the user-related information storage unit further stores each terminal property information of each of the terminals, and the each terminal property information designates either one of a first property that the presence information renewal unit should renew the presence information of the each terminal, and a second property that the presence information renewal unit should not renew the presence information of the each terminal, and so that the presence information renewal unit renews the presence information of the each terminal only when the each terminal property information designates the first property.

A second aspect of the present invention is a message system including : a message server ; and a plurality of terminals of users, each of the plurality of terminals being accessible to the message server through at least a network, and each of the plurality of terminals including a message client, wherein the message server further includes : a message delivery unit for delivering a message between the terminals ; a user-related information storage unit for storing each presence information of each terminal of each user and each communication group member list belonging to the each user ; a user-related information management unit for notifying a presence information of at least one member, who is listed on the each communication group member list, to the each terminal of the each user ; and a presence information renewal unit for renewing a presence information, which belongs to a terminal of a user as sender who sends a message to the message server, and which is stored in the user-related information storage unit, wherein the presence information renewal unit renews the presence information automatically in response to at least one of a first type event that the message server has received at least one of the message and any other communication from the user as sender, and a second type event that an effective time period for the presence information has expired.

It is also possible that the user-related information management unit further renews a presence information of a terminal of a user as renewal requester who has sent a request for renewal of the presence information in response to receipt of the request for renewal from the user as renewal requester.

It is also possible that the user-related information management unit furthermore sets an effective time period for the presence information as renewed by the user-related information management unit, so that the presence information, as once renewed, is further renewed when the effective time period has expired.

It is also possible that the user-related information management unit receives the effective time period together with the request for renewal from the terminal of the user as renewal requester.

It is also possible that the user-related information management unit receives next-renewal contents of the presence information in addition to the request for renewal from the user as renewal requester, where the next-renewal contents are to be used for a next-renewal to be made in response to the second type event based on the next-renewal contents subsequent to a currently requested renewal by the request for renewal.

It is also possible to further include : a presence renewal control information storage unit for storing : renewal contents for renewing a presence information based on the renewal contents in response to the first type event ; the effective time period for the presence information as renewed ; and next-renewal contents for renewing the presence information, as once renewed, in response to the second type event, wherein the renewal contents, the effective time period, and the next-renewal contents are common to the terminals of all the users.

It is also possible that the user-related information storage unit stores renewal contents for renewing a presence information based on the renewal contents in response to the first type event ; the effective time period for the presence information as renewed ; and next-renewal contents for renewing the presence information, as once renewed, in response to the second type event, wherein the renewal contents, the effective time period, and the next-renewal contents are unique to each of the terminals of all the users.

It is also possible that the user-related information management unit does not set any effective time period for a presence information as renewed by the user-related information management unit based on the request for renewal from the user as renewal requester.

It is also possible that the user-related information management unit sets an effective time period for a presence information as renewed by the user-related information management unit based on the request for renewal from the user as renewal requester, and where the effective time period is designated by the request for renewal.

It is also possible that the user-related information management unit sets an effective time period for a presence information as renewed by the user-related information management unit based on the request for renewal from the user as renewal requester, and where the effective time period is designated by the request for renewal, and the user-related information management unit further sets next-renewal contents for further renewing the presence information as renewed based on the next-renewal contents at the second time when the effective time period as set for the presence information as renewed has expired.

It is also possible that the any other communication from the user as sender includes at least one of a first type access from a telephone device to the message server and a second type access from a Web-browser to the message server.

It is also possible that the user-related information storage unit further stores each terminal property information of each of the terminals, and the each terminal property information designates either one of a first property that the presence information renewal unit should renew the presence information of the each terminal, and a second property that the presence information renewal unit should not renew the presence information of the each terminal, and so that the presence information renewal unit renews the presence information of the each terminal only when the each terminal property information designates the first property.

It is also possible that each of the message clients includes : a message transmitting receiving unit for transmitting the message to the message server and receiving another message from the message server ; and a communication group member list management unit for sending the message server the communication group member list together with a request for storing the communication group member list into the user-related information storage unit, so that the user-related information storage unit stores the communication group member list based on the request by the communication group member list management unit.

It is also possible that each of the message client further includes : a presence renewal control information registration unit for sending each presence renewal control information, which is unique to each user together with a request for registration of the each presence renewal control information, to the user-related information management unit of the message server, so that the user information management unit registers the each presence renewal control information in the message server, based on the request for registration of the each presence renewal control information.

It is also possible that each of the plurality of terminals further includes : a telephone device being accessible to the message server ; and a Web browser being accessible to the message server, and wherein the any other communication from the user as sender includes at least one of a first type access from the telephone device to the message server and a second type access from the Web-browser to the message server.

It is also possible that the message server further includes : a first presence renewal control information storage unit for storing a first presence renewal control information to be used for renewing a presence information in response to the first type event that the server receives the message ; a second presence renewal control information storage unit for storing a second presence renewal control information to be used for renewing the presence information in response to the first type event that the server receives the first type access from the telephone device ; and a third presence renewal control information storage unit for storing a third presence renewal control information to be used for renewing the presence information in response to the first type event that the server receives the second type access from the Web-browser.

It is also possible that each of the plurality of terminals further includes : a terminal device identification information storing unit for storing a terminal device identification information which designates either one of a first identifier that the presence information of the each terminal should be renewed, and a second identifier that the presence information of the each terminal should not be renewed, and so that the presence information renewal unit receives the terminal device identification information and renews the presence information of the each terminal only when the each terminal property information designates the first identifier.

A third aspect of the present invention is a method of management of a presence information by a message server. The method includes : notifying a presence information of at least one member listed on each communication group member list belonging to each user ; and renewing a presence information, which belongs to a terminal of a user as sender who sends a message to the message server, wherein the presence information is automatically renewed in response to at least one of a first type event that the message server has received at least one of the message and any other communication from the user as sender, and a second type event that an effective time period for the presence information has expired.

It is also possible that a presence information of a terminal of a user as renewal requester, who has sent a request for renewal of the presence information, is further renewed upon receipt of the request for renewal from the user as renewal requester.

It is also possible that an effective time period is furthermore set for the presence information as renewed, so that the presence information, as once renewed, is further renewed when the effective time period has expired.

It is also possible that the message server receives the effective time period together with the request for renewal from the user as renewal requester.

It is also possible that the message server receives next-renewal contents of the presence information in addition to the request for renewal from the user as renewal requester, where the next-renewal contents are to be used for a next-renewal to be made in response to the second type event based on the next-renewal contents subsequent to a currently requested renewal by the request for renewal.

It is also possible to further include : storing : renewal contents for renewing a presence information based on the renewal contents in response to the first type event ; the effective time period for the presence information as renewed ; and next-renewal contents for renewing the presence information, as once renewed, in response to the second type event, wherein the renewal contents, the effective time period, and the next-renewal contents are common to all the users.

It is also possible to further include : storing : renewal contents for renewing a presence information based on the renewal contents in response to the first type event ; the effective time period for the presence information as renewed ; and next-renewal contents for renewing the presence information, as once renewed, in response to the second type event, wherein the renewal contents, the effective time period, and the next-renewal contents are unique to each of all the users.

It is also possible that any effective time period is not set for a presence information as renewed based on the request for renewal from the user as renewal requester.

It is also possible that an effective time period is set for a presence information as renewed based on the request for renewal from the user as renewal requester, and where the effective time period is designated by the request for renewal.

It is also possible that an effective time period is set for a presence information as renewed based on the request for renewal from the user as renewal requester, and where the effective time period is designated by the request for renewal, and next-renewal contents are further set for further renewing the presence information as renewed based on the next-renewal contents at the second time when the effective time period as set for the presence information as renewed has expired.

It is also possible that the any other communication from the user as sender includes at least one of a first type access from a telephone device to the message server and a second type access from a Web-browser to the message server.

It is also possible to further include : storing a first presence renewal control information to be used for renewing a presence information in response to the first type event that the server receives the message ; storing a second presence renewal control information to be used for renewing the presence information in response to the first type event that the server receives the first type access from the telephone device ; and storing a third presence renewal control information to be used for renewing the presence information in response to the first type event that the server receives the second type access from the Web-browser.

It is also possible to further include : storing each terminal property information of each of the terminals, and the each terminal property information designating either one of a first property that the presence information of the each terminal should be renewed, and a second property that the presence information of the each terminal should not be renewed, and so that the presence information of the each terminal is renewed only when the each terminal property information designates the first property.

A fourth aspect of the present invention is an apparatus for management of a presence information. The apparatus includes : a user-related information management unit for notifying a presence information of at least one member listed on each communication group member list belonging to each user ; and a presence information renewal unit for renewing a presence information, which belongs to a terminal of a user as sender who sends a message to the message server, and which is stored in the user-related information storage unit, wherein the presence information renewal unit renews the presence information automatically in response to at least one of a first type event that the message server has received at least one of the message and any other communication from the user as sender, and a second type event that an effective time period for the presence information has expired.

It is also possible that the user-related information management unit further renews a presence information of a terminal of a user as renewal requester who has sent a request for renewal of the presence information in response to receipt of the request for renewal from the user as renewal requester.

It is also possible that the user-related information management unit furthermore sets an effective time period for the presence information as renewed by the user-related information management unit, so that the presence information, as once renewed, is further renewed when the effective time period has expired.

It is also possible that the user-related information management unit receives the effective time period together with the request for renewal from the terminal of the user as renewal requester.

It is also possible that the user-related information management unit receives next-renewal contents of the presence information in addition to the request for renewal from the user as renewal requester, where the next-renewal contents are to be used for a next-renewal to be made in response to the second type event based on the next-renewal contents subsequent to a currently requested renewal by the request for renewal.

It is also possible to further include : a presence renewal control information storage unit for storing : renewal contents for renewing a presence information based on the renewal contents in response to the first type event ; the effective time period for the presence information as renewed ; and next-renewal contents for renewing the presence information, as once renewed, in response to the second type event, wherein the renewal contents, the effective time period, and the next-renewal contents are common to the terminals of all the users.

It is also possible that the user-related information storage unit stores renewal contents for renewing a presence information based on the renewal contents in response to the first type event ; the effective time period for the presence information as renewed ; and next-renewal contents for renewing the presence information, as once renewed, in response to the second type event, wherein the renewal contents, the effective time period, and the next-renewal contents are unique to each of the terminals of all the users.

It is also possible that the user-related information management unit does not set any effective time period for a presence information as renewed by the user-related information management unit based on the request for renewal from the user as renewal requester.

It is also possible that the user-related information management unit sets an effective time period for a presence information as renewed by the user-related information management unit based on the request for renewal from the user as renewal requester, and where the effective time period is designated by the request for renewal.

It is also possible that the user-related information management unit sets an effective time period for a presence information as renewed by the user-related information management unit based on the request for renewal from the user as renewal requester, and where the effective time period is designated by the request for renewal, and the user-related information management unit further sets next-renewal contents for further renewing the presence information as renewed based on the next-renewal contents at the second time when the effective time period as set for the presence information as renewed has expired.

It is also possible that the any other communication from the user as sender includes at least one of a first type access from a telephone device to the message server and a second type access from a Web-browser to the message server.

It is also possible to further include : a first presence renewal control information storage unit for storing a first presence renewal control information to be used for renewing a presence information in response to the first type event that the server receives the message ; a second presence renewal control information storage unit for storing a second presence renewal control information to be used for renewing the presence information in response to the first type event that the server receives the first type access from the telephone device ; and a third presence renewal control information storage unit for storing a third presence renewal control information to be used for renewing the presence information in response to the first type event that the server receives the second type access from the Web-browser.

It is also possible that the user-related information storage unit further stores each terminal property information of each of the terminals, and the each terminal property information designates either one of a first property that the presence information renewal unit should renew the presence information of the each terminal, and a second property that the presence information renewal unit should not renew the presence information of the each terminal, and so that the presence information renewal unit renews the presence information of the each terminal only when the each terminal property information designates the first property.

The word "message" means any information which is informational to users and which is transmitted between users. The "message" may be realized by any types of data which may include, but not limited to, text data, voice data, and static and/or dynamic image data, and any combinations thereof as multimedia. The word "message service" means any service for realizing transmission and receipt of the message between users. The word "message system" means any system for realizing transmission and receipt of the message between users.

The following embodiments are typical examples for practicing the foregoing aspects of the present invention. Although the subject matters of the present invention have been described in details, the following additional descriptions in one or more typical preferred embodiments or examples will be made with reference to the drawings for making it easy to understand the typical modes for practicing the foregoing aspects of the present invention.

### FIRST EMBODIMENT:

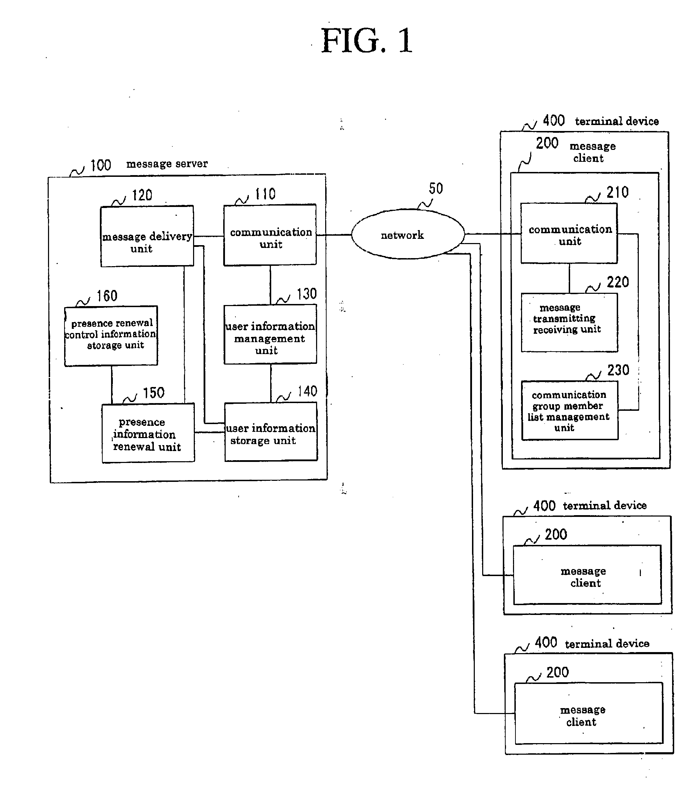

A first embodiment according to the present invention will be described in detail with reference to the drawings. FIG 1 is a block diagram illustrative of a schematic configuration of a message system in a first embodiment in accordance with the present invention. The message system may include a message server 100, a plurality of terminal devices 400 of users, each of which is functionally and operationally coupled to the message server 100 through a network 50. Each of the plural terminal devices 400 further includes a message client 200. The words "message server" and "message client" will, hereinafter be referred to as "server" and "client", respectively.

The network 50 is to establish communications between the server 100 and the client 200 of each of the plural user's terminal devices 400. The network 50 may typically be realized by the Internet. Any available communication protocols may be used for communications on the network 50 between the server 100 and the clients 200. The available communication protocols may, typically, include any available standardized protocols such as Simple Mail Transfer Protocol (SMTP), Hypertext Transfer Protocol (HTTP), and Session Initiation Protocol (SIP), and any usable original or unique protocols.

The server 100 may be realized by any server which is provided from a service provider who provides the message service. The server 100 may typically include, but not limited to, a communication unit 110, a message delivery unit 120, an user information management unit 130, an user information storage unit 140, a presence information renewal unit 150 and a presence renewal control information storage unit 160.

The communication unit 110 is communicated through the network 50 to the client 200 included in each of the plural user's terminal devices 400. The message delivery unit 120 is functionally and operationally coupled to the communication unit 110, so that the message delivery unit 120 receives a message from one of the clients 200 through the communication unit 110 and the network 50, and further delivers the received message to other clients 200 through the communication unit 110 and the network 50.

The user information storage unit 140 is functionally and operationally coupled to the message delivery unit 120, so that the user information storage unit 140 receives user's informations including presence informations of the users from the message delivery unit 120 and stores the received user's informations. The user information management unit 130 is functionally and operationally coupled to the user information storage unit 140, so that the user information management unit 130 manages the user's informations including the presence informations, which are stored in the user information storage unit 140.

The presence information renewal unit 150 is functionally and operationally coupled to the user information storage unit 140, so that the presence information renewal unit 150 renews the user's presence informations stored in the user information storage unit 140. The presence renewal control information storage unit 160 is functionally and operationally coupled to the presence information renewal unit 150, so that the presence renewal control information storage unit 160 stores control informations for enabling the presence information renewal unit 150 to renew the presence informations based on the control informations. Further, the presence information renewal unit 150 is also functionally and operationally coupled to the message delivery unit 120 for operations to be described later. Furthermore, the user information management unit 130 is also functionally and operationally coupled to the communication unit 110 for operations to be described later.

Each of the above-described communication unit 110, message delivery unit 120, user information management unit 130, user information storage unit 140, presence information renewal unit 150 and presence renewal control information storage unit 160 may typically realized by a functionally and operationally discrete unit or block, but not limited to a physically discrete unit or block.

The server 100 may, therefore, be realized by a computer and a server-readable program which is executable over the computer. The computer may include any available hardwares such as workstations or personal computers which execute the program. The server-readable program may be stored in any available computer-readable storage medium such as magnetic disks, optical disks, semiconductor memories and CD-ROM. Upon application of a power to the computer, the program is read by the computer, and the computer operates in accordance with the program, thereby realizing the above-described functionally and operationally discrete units or blocks.

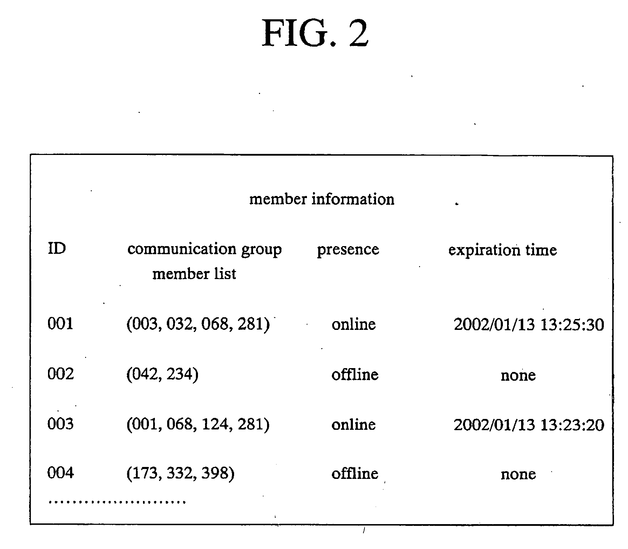

FIG. 2 is a view of one example of the member informations stored in the user information storage unit 140. The user information storage unit 140 stores a plurality of user's informations including the user's presence informations, which will be referred to as member informations in descriptions to be made with reference to FIG 2. Member informations respectively correspond to the respective clients 200 of the plural user's terminal devices 400. Each of the member informations may typically include, but not limited to, an user's identification number (user ID), a communication group member list which designates all of the members, to which this user intends to communicate, a presence information of this user, and an effective time period or an expiration time of the presence information. Throughout the specification, claims and drawings, the present specification, the word "effective time period" means a time period with an initial time when the presence information becomes effective and an expiration time when the presence information becomes ineffective or expired. The word "expiration time" defines only the time when the presence information becomes ineffective or expired.

The user ID is an identifier which identifies the user ID. The communication group member list is unique for each user and designates all of the members, to which this user intends to communicate together, so that the user is enabled to transmit or receive any messages to or from the members together with recognitions of the presence informations of the members. The members may of course include, but not limited to, this user's family, friends and associates or colleagues.

The presence information represents the state of the user. In this embodiment, there are two types of the presence information. The first presence information represents a first state that this user has transmitted one or more messages at least one time from a predetermined time ago to the present. The second presence information represents any other states than the above first state. These first and second presence informations may have optionally given names, respectively, as long as the other users might recognize the state. For convenience in description, the first and second presence information names will, hereinafter, be referred to as "on-line" and "of-line". The effective time period or the expiration time of the presence information indicates when the presence information becomes ineffective. In this embodiment, the effective time period or the expiration time may be given only when the presence information is "on-line". Namely, if the presence information is "off-line", then no effective time period nor expiration time is given.

A top-listed member's information comprises the followings. The user's ID "001" identifies an user "001". The communication group member list designates all the members "003", "032", "068", and "281", to which the user "001" intends to communicate. The first presence information "on-line" represents the first state that the user "001" has transmitted one or more messages at least one time from a predetermined time ago to the present. The effective time period or the expiration time is "2002/01/13 13:25:30".

A second-listed member's information comprises the followings. The user's ID "002" identifies an user "002". The communication group member list designates all the members "042", and "234", to which the user "002" intends to communicate. The second presence information "off-line" represents the second state other than the first state. No effective time period nor expiration time is given.

A third-listed member's information comprises the followings. The user's ID "003" identifies an user "003". The communication group member list designates all the members "001", "068", "124", and "281", to which the user "003" intends to communicate. The first presence information "on-line" represents the first state that the user "003" has transmitted one or more messages at least one time from a predetermined time ago to the present. The effective time period or the expiration time is "2002/01/13 13:23:20".

A fourth-listed member's information comprises the followings. The user's ID "004" identifies an user "004". The communication group member list designates all the members "173", "332" and "398", to which the user "004" intends to communicate. The second presence information "off-line" represents the second state other than the first state. No effective time period nor expiration time is given.

The user's information may further include any additional property informations of each the users, which are stored in the user information storage unit 140, and managed by the user information management unit 130. The additional property informations of each the users may, for example, include, but not limited to, user's name, telephone number, e-mail address, postal address, street address, birthday, and other informations related to the user.

The presence renewal control information storage unit 160 stores a previously set presence renewal control information which is unique to the present message system. The presence renewal control information may typically include, but not limited to : a first renewal information about how the user's presence information of the client 200 should be renewed upon transmission of the message of the client 200 ; an effective time period for maintaining the last-renewed presence information ; and a second renewal information about how the user's presence information of the client 200 should be renewed after the effective time period expired.

The client 200 of each of the user's terminal devices 400 enables the user of this terminal device 400 to transmit or receive messages to or from the other users through the above-described server 100, as well as to confirm the presence informations of the designated members included in the communication group member list which has previously been stored in the user information storage unit 140 of the server 100. The each client 200 may include, but not limited to, a communication unit 210, a message transmitting receiving unit 220, and a communication group member list management unit 230.

The communication unit 210 is communicated through the network 50 to the server 100. The message transmitting receiving unit 220 is functionally and operationally coupled to the communication unit 210, so that the message transmitting receiving unit 220 receives a message from the server 100 through the communication unit 210 and the network 50, and further transmits a message of this client 200 to the server 100 through the communication unit 210 and the network 50.

The communication group member list management unit 230 is functionally and operationally coupled to the communication unit 210, so that the communication group member list management unit 230 registers the communication group member list onto the server 100 and also fetches, from the server 100, the presence information of the communication counter-part who is included in the communication group member list registered on the server 100, thereby providing the presence information of the communication counter-part to the user.

Each of the above-described communication unit 210, message transmitting receiving unit 220, communication group member list management unit 230 may typically realized by a functionally and operationally discrete unit or block, but not limited to a physically discrete unit or block.

The each client 200 may, therefore, be realized by a computer and a client-readable program which is executable over the computer. The computer may include any available hardwares such as workstations or personal computers which execute the program. The client-readable program may be stored in any available computer-readable storage medium such as magnetic disks, optical disks, semiconductor memories and CD-ROM. Upon application of a power to the computer, the program is read by the computer, and the computer operates in accordance with the program, thereby realizing the above-described functionally and operationally discrete units or blocks.

Operations of the above-described message system of this embodiment in accordance with the present invention will subsequently be described.

Prior to operations of the message system, the server 100 should be prepared by a system manager so that a presence renewal control information is set on the presence renewal control information storage unit 160 by any available method which may include, but not limited to, an entry operation using any available input device such as a key board, and a copying operation from any available storage medium such as a flexible disk.

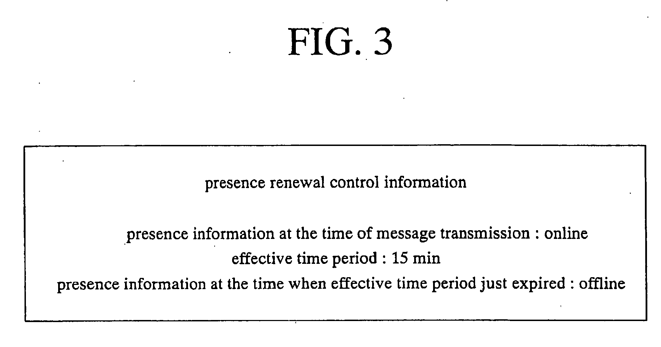

FIG 3 is a view illustrative of one example of the presence renewal control information set on the presence renewal control information storage unit 160. The presence information is renewed to "on-line" at a message transmission time. The effective time period of the renewed presence information is 15 minutes from the message transmission time. When the effective time period expires, then the presence information "on-line" is renewed to "off-line". The effective time period may be optional, and may be any time period such as 30 minutes. Instead of the effective time period, the expiration time may be set, which designates the exact time when the last-renewed presence information becomes ineffective.

It may optionally be possible that any time condition or designation, when a next renewal operation for renewing the last-renewed presence information should be made, is provided to at least one of the renewal operations for renewing the presence information at the message transmission time and the expiration time. One example of the time condition or designation may be that the renewal is made when a given time will pass from the message transmission time.

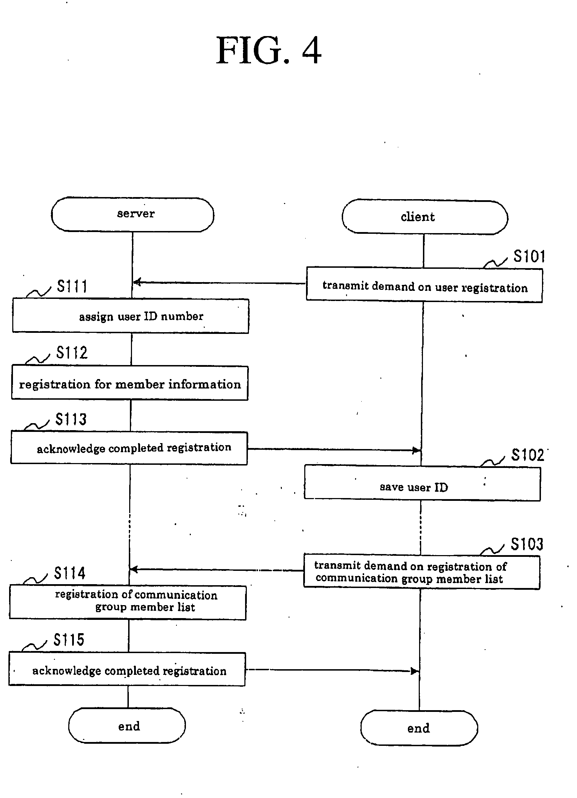

Prior to allowing the user to use the message system, the user's IDs and the communication group member lists are registered onto the server 100. FIG 4 is a flow chart illustrative of registration operations of registering the user's IDs and the communication group member lists onto the server 100 from the client 200.

In step S101, the user of the client 200 instructs the communication group member list management unit 230 to commence an user registration onto the server 100, so that the communication group member list management unit 230 sends a request for user registration to the server 100 through the communication unit 210 and the network 50.

In step S111, the user information management unit 130 in the server 100 receives the request for user registration through the communication unit 110, so that the user information management unit 130 allocates or assigns a unique user identification number (user ID) to the request for user registration or to this user.

In step S112, the user information management unit 130 creates a new member information which includes this allocated user ID and registers the member information onto the user information storage unit 140. The member information has been described above with reference to FIG. 2, wherein the allocated user ID is indicated, and the member list is null or vacant, and the presence information is initially and provisionally set "off-line" and the effective time period is also initially and provisionally set "none".

In step S113, after the user information management unit 130 finished the above registration operation of the member information, then the user information management unit 130 sends a notice of user registration completion to the client 200 which has sent this request for user registration. The notice of user registration completion includes the allocated user ID. The notice of user registration completion notifies or informs this client 200 of the allocated user ID and the completion of the user registration.

In step S102, the communication group member list management unit 230 in the client 200 holds and manages the allocated user ID which is included in the notice of user registration completion from the server 100. The user ID is to be utilized to identify the client 200 which requests the registration of the communication group member list and also requests the message transmission.

In step S103, the user of the client 200 enters an instruction to register the communication group member list which designates other user's identification numbers (other user's IDs) of communication counter-parts, to which this user intends to communicate. In accordance with the user's entered instruction, the communication group member list management unit 230 sends a request for registration of the communication group member list including the designated other user's identification numbers (other user's IDs), together with the ID allocated to this user of the client 200, to the server 100 through the communication unit 210 and the network 50.

It is optionally possible that the server 100 provides the client 200 with an additional retrieval service for retrieving the other user's IDs, so that each user is enabled to confirm respective IDs of other users who are included in the communication group member list registered on the server 100.

In step S114, the user information management unit 130 in the server 100 receives the request for registration of the communication group member list from the client 200 through the communication unit 110. The user information management unit 130 retrieves, from the user information storage unit 140, member informations which possess the same user's IDs as the user ID of this requester. The user information management unit 130 registers the user's IDs of the communication counter-parts onto the communication group member list of the retrieved member informations.

In step S115, the user information management unit 130 sends a notice of completion of the registration the communication group member list to the client 200 of this requester.

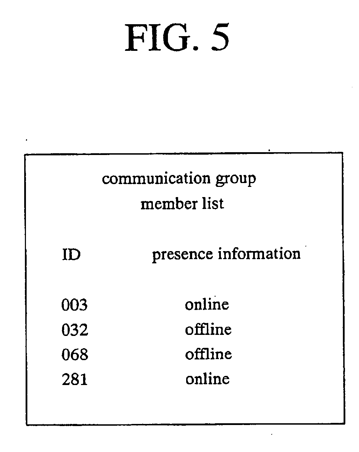

The communication group member list management unit 230 of the client 200 receives the notice of completion of the registration the communication group member list from the server 100. The communication group member list management unit 230 holds and manages this communication group member list. FIG. 5 is a view illustrative of one example of the communication group member list managed in the communication group member list management unit 230. Four users with user's IDs "003", "032", "068" and "281" are registered on the communication group member list, wherein the first-listed and fourth-listed user "003" and "281" have the first presence information "on-line" whilst the second-listed and third-listed users "032" and "068" have the second presence information "off-line". At the time when the four users are just registered, the presence informations are uniformly set "NULL" provisionally.

As described above, the member informations, including the user's IDs of the clients 200 and the communication group member lists, are registered onto the user information storage unit 140 in the server 100. The user of the client 200 transmits and receives one or more messages with confirmation, if any, of the presence informations of the communication counter-parts who are included in the communication group member lists as registered on the server 100. The contents of the registered communication group member list may be changed at anytime by transmitting a request for change to the registered communication group member list from the communication group member list management unit 230 of the client 200 to the user information management unit 130 of the server 100.

In accordance with the above descriptions, the user uses the client 200 to register the user's ID and the communication group member list onto the server 100. It is optionally available that the user may have any other access to the server 100 for registrations of the user's ID and the communication group member list onto the server 100. The other access may include, but not limited to, using a Web browser on any other computer for access to the server 100.

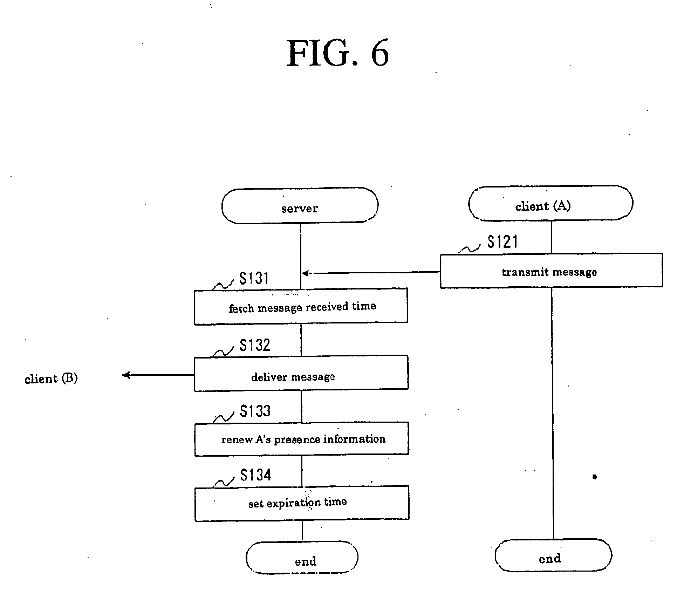

Subsequently, operations of the message system for transmission and receipt of one or more messages between the clients 200 through the server 100 will be described. In this descriptions, a first user, who transmits or sends one or more messages, will be referred to as user "A", and a second user, who is a destination of the message for receiving the message, will be referred to as user "B". FIG 6 is a flow chart illustrative of an example of operations of the message system for transmission and receipt of one or more messages between the clients 200 through the server 100.

In step S121, the user "A" instructs the message transmitting receiving unit 220 of the client 200 to create a message and also designates a user ID of the user "B" as a message destination, and enters a request for transmission of the message into the message transmitting receiving unit 220. Upon receipt of the request for transmission of the message from the user "A", the message transmitting receiving unit 220 adds the message with a transmission header which includes the user ID of the user "B" as the message receiver and the user ID of the user "A" as the message sender. The message transmitting receiving unit 220 sends the message with the transmission header to the message delivery unit 120 in the server 100 through the communication unit 210 and the network 50.

In step S131, the message delivery unit 120 in the server 100 receives the message from the client 200 of the user "A", and fetches a message received time from an internal timer in the server 100 and temporary stores the message with the message received time.

In step S132, the message delivery unit 120 sends the message of the user "A" to the message transmitting receiving unit 220 of the client 200 of the user "B" as the destination, who has the user ID designated by the user "A". The message transmitting receiving unit 220 of the client 200 of the user "B" receives the message of the user "A" and represents or displays the message to the user "B". If the message delivery unit 120 of the server 100 is unable to access to the client 200 of the user "B", then the message delivery unit 120 may optionally send a notice to the effect that any access to the client 200 of the user "B" is not available now. Otherwise, the message delivery unit 120 may repeat re-sending operations of the message to the client 200 of the user "B" predetermined times and only when any access to the client 200 of the user "B" is not yet available, then the message delivery unit 120 may first send a notice to the effect that any access to the client 200 of the user "B" has been available.

In step S133, the message delivery unit 120 transmits the message receiving time and the user ID of the user "A" as the message sender to the presence information renewal unit 150, so that the presence information renewal unit 150 renews the presence information of the user "A" which is stored in the user information storage unit 140. Namely, the presence information renewal unit 150 retrieves the member information which has the same ID as the user ID of the usr "A" from the user information storage unit 140, and renews the presence information included in the retrieved member information into a presence information at a message transmitting time, which is set in the presence renewal control information storage unit 160.

In step S134, the presence information renewal unit 150 decides an effective time period or an expiration time of the just-renewed presence information based on the above-described message received time and also based on an information related to the effective time period, which is set in the presence renewal control information storage unit 160. The presence information renewal unit 150 sets the decided effective time period or expiration time in the member information.

It is assumed that the presence renewal control information storage unit 160 of the sever 100 has the presence renewal control information as shown in FIG. 3. If the message is sent by the client 200 of the user "A" at a time "2002/01/13 13:10:30", then the presence information renewal unit 150 renews the presence information and its expiration time of the user "A" stored in the user information storage unit 140 into "on-line" and "2002/01/13 13:25:30", respectively.

The sequences of the steps S132, S133 and S134 may be optional and thus may be changed from that shown in FIG 6.

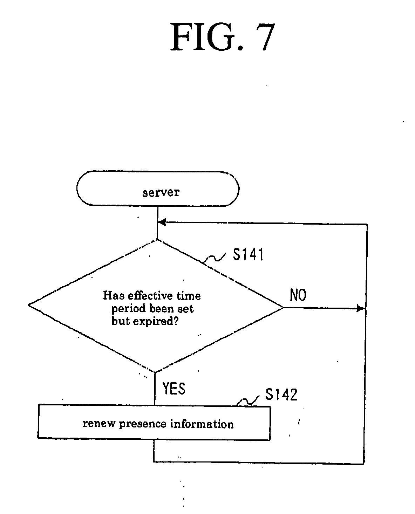

Renewal operations made by the presence information renewal unit 150 of the server 100 to the member informations of all the users registered on the user information storage unit 140 of the server 100 will subsequently be described. FIG. 7 is a flow chart illustrative of renewal operations made by the presence information renewal unit 150 of the server 100 to the member informations of all the users registered on the user information storage unit 140 of the server 100. The presence information renewal unit 150 of the server 100 performs respective renewal operations for respective member informations stored on the user information storage unit 140 separately.

In step S141, the presence information renewal unit 150 verifies whether any effective time period or any expiration time has already been set or not yet for the presence information included in the member information. If the effective time period or the expiration time has already been set, then the presence information renewal unit 150 further verifies whether the effective time period or the expiration time has already expired or not yet.

In step S142, if the effective time period or the expiration time has been set but already expired, then the presence information renewal unit 150 renews the presence information included in the member information. Namely, the presence information renewal unit 150 renews the presence information into a new presence information at the expiration time when the effective time period expired, wherein the new presence information accords to the renewal information previously set in the presence renewal control information storage unit 160. If, for example, the member information shown in FIG 3 is set on the presence renewal control information storage unit 160, then the presence information renewal unit 150 renews the presence information into "off-line", and further concurrently set "absence" for the effective time period, which indicates that the effective time period is absent for the just-renewed presence information.

After the presence information renewal unit 150 finished the above-described processes of steps S141 and S142 for the above member information, then with or without a predetermined time interval, the presence information renewal unit 150 will repeat the same sequential processes of steps S141 and S142 for other member informations.

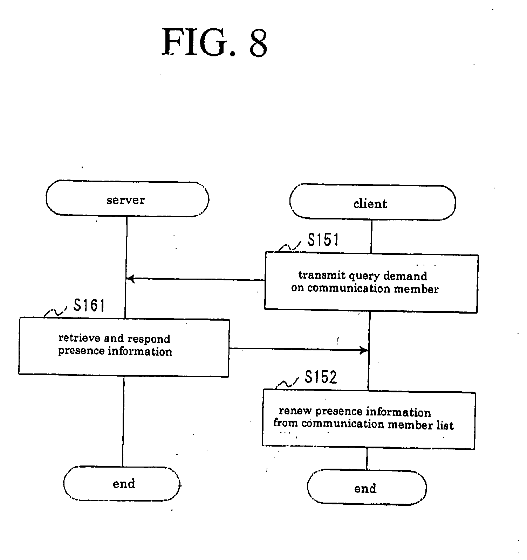

Operations of notifying or informing the client 200 of the respective presence informations of the respective users, which are stored and managed in the user information storage unit 140 in the server 100 will be described. FIG. 8 is a flow chart illustrative of one example of sequential operations made by the message system for notifying or informing the client 200 of the respective presence informations of the respective users, which are stored and managed in the user information storage unit 140 in the server 100.

In step S151, the communication group member list management unit 230 of the client 200 sends a request for inquiry of the presence informations of the members together with the user ID itself to the user information management unit 130 in the server 100 through the communication unit 210 and the network 50. An appropriate timing of sending the request for inquiry has previously been set in the client 200. One example of the available timing of sending the request for inquiry may be so set, but not limited to, "the request for inquiry will automatically be sent periodically and cyclically", or " the request for inquiry will be sent ". The timing of sending the request for inquiry may be set according to the user's instruction.

In step S161, upon receipt of the request for inquiry through the communication unit 110 from the client 200, the user information management unit 130 of the server 100 retrieves a presence information corresponding to the user ID received together with the request, from the user information storage unit 140. The user information management unit 130 sends the retrieved presence information to the communication group member list management unit 230 of the client 200 through the communication unit 110 and the network 50. Namely, the user information management unit 130 of the server 100 retrieves a member information possessing the same ID as the received user's ID of the requester, from the user information storage unit 140, in order to obtain a communication group member list included in the retrieved member information. Based on each of user's IDs listed in the obtained communication group member list, the user information management unit 130 verifies whether the member information possesses the same ID as the received user's ID of the requester. If the user information management unit 130 verifies that the member information possesses the same ID as the received user's ID of the requester, then the user information management unit 130 obtains a presence information of the verified member information. These processes will be repeated for all of the user's IDs listed in the obtained communication group member list. The user information management unit 130 sends a set of all the obtained presence informations with corresponding user's IDs to the client 200 of the requester through the communication unit 110 and the network 50.

In step S152, the communication group member list management unit 230 of the client 200 receives the retrieved new presence information from the user information management unit 130 of the server 100, and then renews the old or existent presence information managed therein into the retrieved new presence information. It is, for example, assumed that four communication counter-parts with respective user's IDs "003", "032", "068" and "281" are registered on the communication group member list of the communication group member list management unit 230, and also that the communication group member list management unit 230 receives respective new or renewed presence informations "on-line", "off-line", "off-line" and "on-line" for the four communication counter-parts with respective user's IDs "003", "032", "068" and "281", respectively. In this case, the communication group member list management unit 230 renews the old or existent presence informations managed therein into the new or renewed presence informations "on-line", "off-line", "off-line" and "on-line" for the four communication counter-parts with respective user's IDs "003", "032", "068" and "281", respectively as shown in FIG. 5. Subsequently, the communication group member list management unit 230 represents or displays the renewed presence informations to the user automatically or upon receipt of a user's request for displaying the newest presence informations of the members managed on the communication group member list.

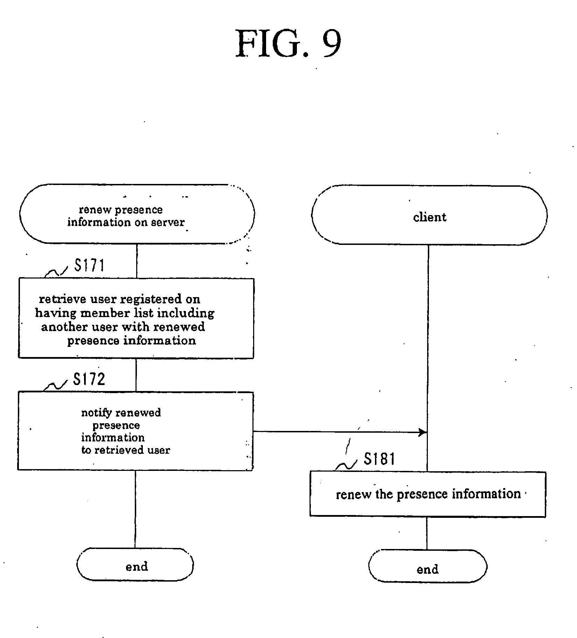

FIG 9 is a flow chart illustrative of another example of sequential operations made by the message system for notifying or informing the client 200 of the respective presence informations of the respective users, which are stored and managed in the user information storage unit 140 in the server 100. These processes are executed when the presence information of any user is renewed in the server 100. For example, the presence information is renewed in the above described step S133 of FIG. 6 and the above described step S142. In this case, the present processes to be described below are executed.

In step S171, the user information management unit 130 of the server 100 retrieves a user who has a communication group member list which includes another user possessing the renewed presence information. Namely, the user information management unit 130 retrieves, from the user information storage unit 140, to a member information which has a communication group member list which includes an user's ID of a user whose presence information has been renewed, and then obtains the user's ID included in the retrieved member information.

In step S172, for each the obtained user's ID, the user information management unit 130 sends a presence renewal information, which includes the renewed presence information and the user's ID whose presence information has been renewed, to the communication group member list management unit 230 of the client 200 of the user who is allocated with the same user's ID through the communication unit 110 and the network 50.

In step S181, the communication group member list management unit 230 of the client 200 receives the presence renewal information, and retrieves a presence information corresponding to the user's ID designated by the received presence renewal information from the presence informations included in the communication group member list managed therein, so that the communication group member list management unit 230 renews the corresponding presence information into a new presence information which is designated by the received presence renewal information.

The above descriptions made with reference to FIGS. 8 and 9 demonstrate the first and second examples of sequential operations made by the message system for notifying or informing the client 200 of the respective presence informations of the respective users, which are stored and managed in the user information storage unit 140 in the server 100. It is, however, possible to realize either one or both of the first and second examples shown in FIGS. 8 and 9, or in combination with still another example of notifying or informing the respective presence informations.

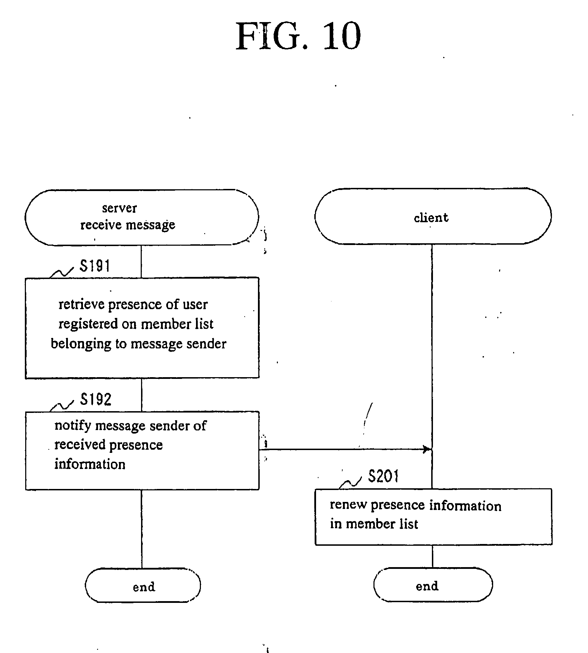

Still another example of notifying or informing the respective presence informations may be that when a user "X" has sent a message, the server 100 sends respective presence informations of users included in a communication group member list of the user "X". FIG. 10 is a flow chart illustrative of still another example of notifying or informing the respective presence informations when the server 100 has received any message from any client 200.

In step S191, the user information management unit 130 of the server 100 receives an user's ID of the user who has sent the message, and retrieves a member information possessing the received user's ID from the user information storage unit 140. For each of user's IDs included in a communication group member list included in the retrieved member information, the user information management unit 130 retrieves each presence information corresponding to this each user's ID from the retrieved member information, so that the user information management unit 130 obtains presence informations of all members included in the communication group member list of the message sender.

In step S192, the user information management unit 130 sends a notice of presence information, which includes all of the retrieved presence informations and those corresponding user's IDs, to the communication group member list management unit 230 of the client 200 of the message sender through the communication unit 110 and the network 50.

In step 201, the communication group member list management unit 230 of the client 200 receives the notice of presence information, and renews the presence informations for the respective users included in the communication group member list managed therein into new presence informations as indicated by the presence renewal informations.

In accordance with the present embodiment, a presence information of a user is automatically renewed by the server 100 at a time when this user sends any message or at another time when a predetermined time passed from the time of sending the message from this user, without any operation by the user. The automatically renewed presence information is then notified to the user through the notice of presence information. This enables the user to confirm, from the received or notified presence information, whether or not any member included in the user's communication group member list has sent any message to this user within a predetermined time period, and thus the user may decide to send a message, based on the presence information. In case that the client 200 of a message destination or a message receiver comprises a mobile telephone, a message receiving call at night or early morning of the mobile telephone might be unwelcome to the message receiver, for which reason the message sender might hesitate to send the message. If, however, the message sender could confirm the presence information "on-line" of the message receiver, this means that a mobile telephone call might now be welcome to the message receiver. For this reason, the message sender might decide to send the message to the message receiver.

In accordance with the present embodiment, the number of the kinds of the presence information is less than that of the conventional system. The present embodiment provides the effective presence information without any load to the user. No communication between the server 100 and the client 200 is needed which is dedicated to renew the presence information, resulting in a reduction in the communication cost.

### SECOND EMBODIMENT:

A second embodiment according to the present invention will be described in detail with reference to the drawings. In the above-described first embodiment, the renewal of the presence information is conducted in the server 100 based on the presence renewal control information which has been set by a system administrator or a system manager, wherein the presence renewal control information is commonly used to all of the users. The present second embodiment enables respective users to set respective presence renewal control informations separately for the respective users. The following descriptions will focus on structural and functional differences of the present second embodiment from the above-described first embodiment.

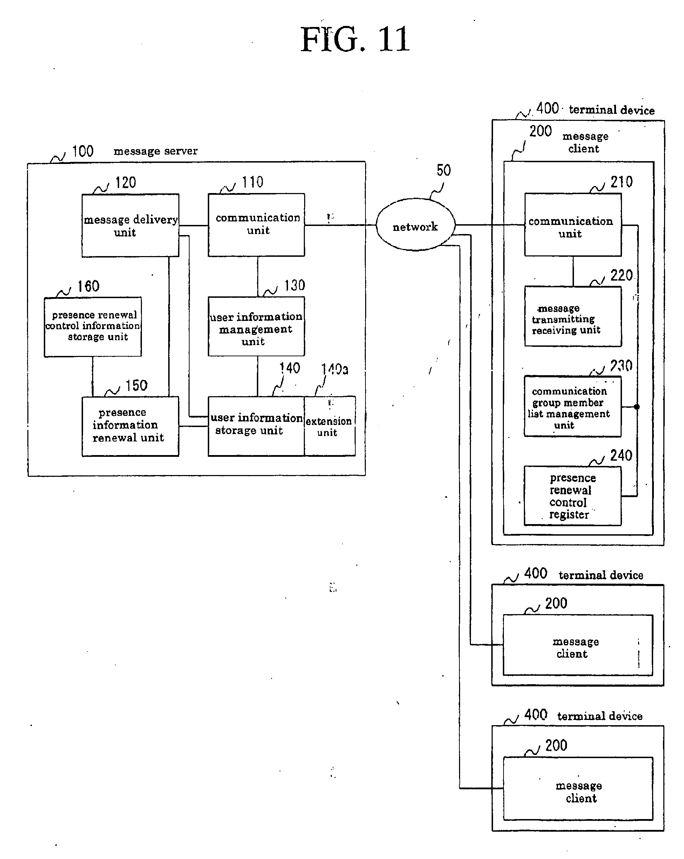

FIG. 11 a block diagram illustrative of a schematic configuration of a message system in a second embodiment in accordance with the present invention. The message system may include a message server 100, a plurality of terminal devices 400 of users, each of which is functionally and operationally coupled to the message server 100 through a network 50. Each of the plural terminal devices 400 further includes a message client 200. The words "message server" and "message client" will, hereinafter be referred to as "server" and "client", respectively.

The network 50 is to establish communications between the server 100 and the client 200 of each of the plural user's terminal devices 400. The server 100 may typically include, but not limited to, a communication unit 110, a message delivery unit 120, an user information management unit 130, an user information storage unit 140 with an extension unit 140a, a presence information renewal unit 150 and a presence renewal control information storage unit 160. The communication unit 110, the message delivery unit 120, the user information management unit 130, the presence information renewal unit 150 and the presence renewal control information storage unit 160 of this second embodiment are identical with the above described units of the first embodiment. The user information storage unit 140 of this second embodiment further has an extension unit 140a which stores respective presence renewal control informations for respective users separately. Further provision of the extension unit 140a differentiates the configuration of the server 100 of this second embodiment from the above-described server 100 of the first embodiment.

The client 200 of each of the user's terminal devices 400 enables the user of this terminal device 400 to transmit or receive messages to or from the other users through the above-described server 100, as well as to confirm the respective presence informations of the respective members included in the communication group member list which has previously been stored in the user information storage unit 140, wherein the respective presence informations are stored in the extension unit 140a.

The each client 200 may include, but not limited to, a communication unit 210, a message transmitting receiving unit 220, a communication group member list management unit 230 and a presence renewal control information registration unit 240. The communication unit 210, the message transmitting receiving unit 220, and the communication group member list management unit 230 of this second embodiment are identical with the above-described units of the first embodiment. Further provision of the presence renewal control information registration unit 240 differentiates the configuration of the client 200 of this second embodiment from the above-described client 200 of the first embodiment.

The presence renewal control information registration unit 240 is functionally and operationally coupled to the communication unit 210. The presence renewal control information registration unit 240 of the client 200 sends each presence renewal control information unique to each user to the user information management unit 130 of the server 100 through the communication unit 210 and the network 50 for the purpose of requesting the user information management unit 130 to register the unique presence renewal control information on the presence renewal control information storage unit 160. Each user may enter each unique presence renewal control information which has a uniform format set by the system administrator or the system manager but which is unique in the contents thereof. For example, the effective time period may be changed from 15 minutes shown in FIG 3 to 10 minuets or 60 minutes depending on each user. Of course, a user may not change the presence renewal control information set by the system administrator or the system manager, if this control information is acceptable to this user. Alternatively, it is also possible to add a unique time condition to either one or both of a renewal of the presence information at the time of message transmission and another renewal of the presence information at the time when a predetermined time passed from the message transmission.

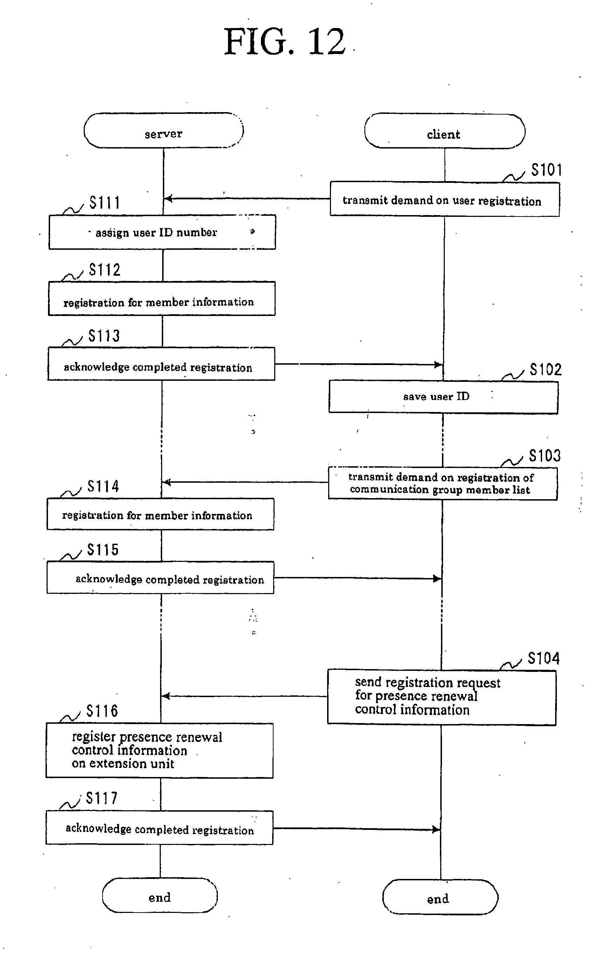

FIG 12 is a flow chart illustrative of sequential operations of registering the user's IDs and the communication group member lists as well as respective unique presence renewal control informations onto the server 100 from the client 200.

In step S101, the user of the client 200 instructs the communication group member list management unit 230 to commence an user registration onto the server 100, so that the communication group member list management unit 230 sends a request for user registration to the server 100 through the communication unit 210 and the network 50.

In step S111, the user information management unit 130 in the server 100 receives the request for user registration through the communication unit 110, so that the user information management unit 130 allocates or assigns a unique user identification number (user ID) to the request for user registration or to this user.

In step S112, the user information management unit 130 creates a new member information which includes this allocated user ID and a free space for user's entry of a presence renewal control information, and registers the member information onto the user information storage unit 140. The member information has been described above with reference to FIG 2, wherein the allocated user ID is indicated, and the member list is null or vacant, and the presence information is initially and provisionally set "null" and the effective time period is also initially and provisionally set "none".

In step S113, after the user information management unit 130 finished the above registration operation of the member information, then the user information management unit 130 sends a notice of user registration completion to the client 200 which has sent this request for user registration. The notice of user registration completion includes the allocated user ID. The notice of user registration completion notifies or informs this client 200 of the allocated user ID and the completion of the user registration.

In step S102, the communication group member list management unit 230 in the client 200 holds and manages the allocated user ID which is included in the notice of user registration completion from the server 100. The user ID is to be utilized to identify the client 200 which requests the registration of the communication group member list and also requests the message transmission.

In step S103, the user of the client 200 enters an instruction to register the communication group member list which designates other user's identification numbers (other user's IDs) of communication counter-parts, to which this user intends to communicate. In accordance with the user's entered instruction, the communication group member list management unit 230 sends a request for registration of the communication group member list including the designated other user's identification numbers (other user's IDs), together with the ID allocated to this user of the client 200, to the server 100 through the communication unit 210 and the network 50.

It is optionally possible that the server 100 provides the client 200 with an additional retrieval service for retrieving the other user's IDs, so that each user is enabled to confirm respective IDs of other users who are included in the communication group member list registered on the server 100.

In step S114, the user information management unit 130 in the server 100 receives the request for registration of the communication group member list from the client 200 through the communication unit 110. The user information management unit 130 retrieves, from the user information storage unit 140, member informations which possess the same user's IDs as the user ID of this requester. The user information management unit 130 registers the user's IDs of the communication counter-parts onto the communication group member list of the retrieved member informations.

In step S115, the user information management unit 130 sends a notice of completion of the registration the communication group member list to the client 200 of this requester.

Subsequent processes are to register the presence renewal control information.

In step S104, the user of the client 200 may instruct the presence renewal control information registration unit 240 to create a unique presence renewal control information, and then further requests the presence renewal control information registration unit 240 to register the created unique presence renewal control information onto the server 100. The presence renewal control information registration unit 240 sends a registration request, which designates this user's ID as a requester's ID and the created unique presence renewal control information, to the user information management unit 130 of the server 100 through the communication unit 210 and the network 50.

In step S116, the user information management unit 130 of the server 100 receives the registration request, and retrieves a member information, which possesses the same user's ID as the requester's ID, from the user information storage unit 140, so that the user information management unit 130 enters the created unique presence renewal control information into an item for the presence renewal control information which is included to the retrieved member information and which has been generated in the extension unit 140a.

In step S117, the user information management unit 130 sends a notice of completion of the registration the presence renewal control information to the client 200 of this requester.

The contents of the registered presence renewal control information may be changed at anytime through transmission of a request for change to the presence renewal control information from the presence renewal control information registration unit 240 of the client 200 to the user information management unit 130 of the server 100.

As described above, in accordance with this embodiment, the user operates the client 200 to access to the server 100 for the intended registration of the presence renewal control information. This registration of the presence renewal control information may also be realized by other access to the server 100, for example, by using a Web browser operable on other computer.

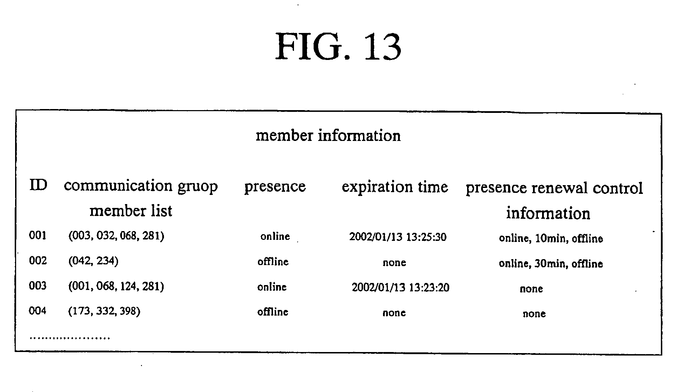

FIG. 13 is a view of one example of the member informations stored in the user information storage unit 140 with the extension unit 140a. The user information storage unit 140 with the extension unit 140a stores plural member informations. Member informations respectively correspond to the respective clients 200 of the plural user's terminal devices 400. Each of the member informations may typically include, but not limited to, an user's identification number (user ID), a communication group member list which designates all of the members, to which this user intends to communicate, a presence information of this user, and an effective time period or an expiration time of the presence information, and additionally a presence renewal control information.

The user information storage unit 140 stores the user's IDs, the communication group member lists, the presence informations, and the effective time periods or the expiration times. The extension unit 140a stores the presence renewal control informations.

The presence renewal control informations shown in FIG. 13 are simplified or shortened, wherein "none" means that any unique presence renewal control information has not yet been set. The left-indicated informations "on-line" represent the presence informations at the time of message transmission. The center-indicated informations "10 minutes" and "30 minutes" represent the effective time periods. The right-indicated informations "off-line" represent the presence informations at the time when the effective time period just expired.

As described above, the registered unique presence renewal control informations which are unique to respective users of the clients 200 are referred for the renewals of the presence informations conducted in the server 100.

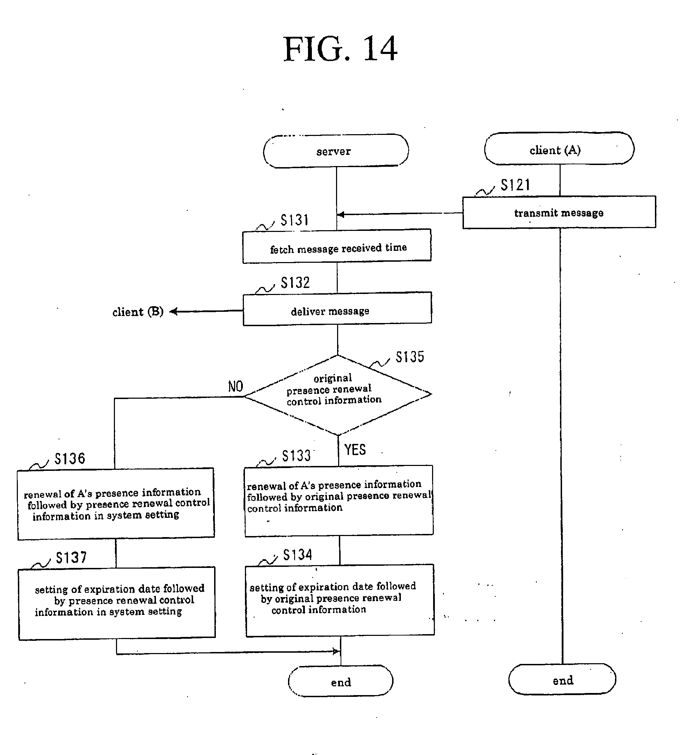

Subsequently, operations of the message system for transmission and receipt of one or more messages between the clients 200 through the server 100 will be described. In this descriptions, a first user, who transmits or sends one or more messages, will be referred to as user "A", and a second user, who is a destination of the message for receiving the message, will be referred to as user "B". FIG. 14 is a flow chart illustrative of an example of operations of the message system for transmission and receipt of one or more messages between the clients 200 through the server 100.

In step S121, the user "A" instructs the message transmitting receiving unit 220 of the client 200 to create a message and also designates a user ID of the user "B" as a message destination, and enters a request for transmission of the message into the message transmitting receiving unit 220. Upon receipt of the request for transmission of the message from the user "A", the message transmitting receiving unit 220 adds the message with a transmission header which includes the user ID of the user "B" as the message receiver and the user ID of the user "A" as the message sender. The message transmitting receiving unit 220 sends the message with the transmission header to the message delivery unit 120 in the server 100 through the communication unit 210 and the network 50.

In step S131, the message delivery unit 120 in the server 100 receives the message from the client 200 of the user "A", and fetches a message received time from an internal timer in the server 100 and temporary stores the message with the message received time.

In step S132, the message delivery unit 120 sends the message of the user "A" to the message transmitting receiving unit 220 of the client 200 of the user "B" as the destination, who has the user ID designated by the user "A". The message transmitting receiving unit 220 of the client 200 of the user "B" receives the message of the user "A" and represents or displays the message to the user "B". If the message delivery unit 120 of the server 100 is unable to access to the client 200 of the user "B", then the message delivery unit 120 may optionally send a notice to the effect that any access to the client 200 of the user "B" is not available now. Otherwise, the message delivery unit 120 may repeat re-sending operations of the message to the client 200 of the user "B" predetermined times and only when any access to the client 200 of the user "B" is not yet available, then the message delivery unit 120 may first send a notice to the effect that any access to the client 200 of the user "B" has been available.

In step S135, the message delivery unit 120 verifies whether or not the user "A" has any unique presence renewal control information stored in the extension unit 140a.

In step S133, if any unique presence renewal control information stored in the extension unit 140a, then the message delivery unit 120 transmits the message receiving time and the user ID of the user "A" as the message sender to the presence information renewal unit 150, so that, in accordance with the unique presence renewal control information stored in the extension unit 140a, the presence information renewal unit 150 renews the presence information of the user "A" which is stored in the user information storage unit 140. Namely, the presence information renewal unit 150 retrieves the member information which has the same ID as the user ID of the usr "A" from the user information storage unit 140, and renews the presence information included in the retrieved member information into a new presence information in accordance with the unique presence renewal control information stored in the extension unit 140a.

In step S134, the presence information renewal unit 150 sets the decided effective time period or expiration time in the member information in accordance with the unique presence renewal control information stored in the extension unit 140a.

In step S136, if any unique presence renewal control information stored in the extension unit 140a, then the message delivery unit 120 transmits the message receiving time and the user ID of the user "A" as the message sender to the presence information renewal unit 150, so that, in accordance with the common presence renewal control information previously set by the system administrator or the system manager, the presence information renewal unit 150 renews the presence information of the user "A" which is stored in the user information storage unit 140. Namely, the presence information renewal unit 150 retrieves the member information which has the same ID as the user ID of the usr "A" from the user information storage unit 140, and renews the presence information included in the retrieved member information into a presence information at a message transmitting time, which is set in the presence renewal control information storage unit 160.

In step S137, the presence information renewal unit 150 decides an effective time period or an expiration time of the just-renewed presence information based on the above-described message received time and also based on an information related to the effective time period, which is set in the presence renewal control information storage unit 160. The presence information renewal unit 150 sets the decided effective time period or expiration time in the member information in accordance with the common presence renewal control information previously set by the system administrator or the system manager.

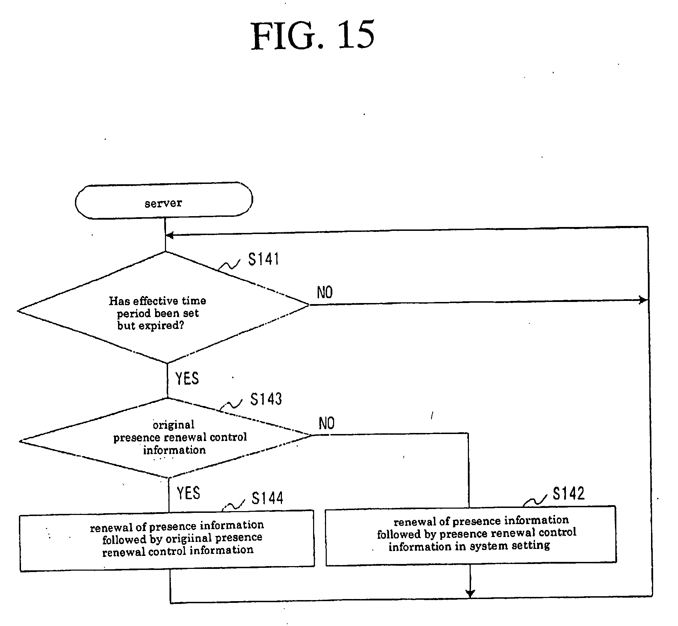

Renewal operations made by the presence information renewal unit 150 of the server 100 to the member informations of all the users registered on the user information storage unit 140 of the server 100 will subsequently be described. FIG. 15 is a flow chart illustrative of renewal operations made by the presence information renewal unit 150 of the server 100 to the member informations of all the users registered on the user information storage unit 140 of the server 100. The presence information renewal unit 150 of the server 100 performs respective renewal operations for respective member informations stored on the user information storage unit 140 separately.

In step S141, the presence information renewal unit 150 verifies whether any effective time period or any expiration time has already been set or not yet for the presence information included in the member information. If the effective time period or the expiration time has already been set, then the presence information renewal unit 150 further verifies whether the effective time period or the expiration time has already expired or not yet.

In step S143, if the effective time period or the expiration time has been set but already expired, then the presence information renewal unit 150 verifies whether any unique presence renewal control information is registered.

In step S144, if any unique presence renewal control information is registered, then the presence information renewal unit 150 renews the presence information included in the member information in accordance with the unique presence renewal control information.

In step S142, if any unique presence renewal control information is not registered, then the presence information renewal unit 150 renews the presence information included in the member information in accordance with the renewal information previously set by the system administrator or the system manager in the presence renewal control information storage unit 160.

After the presence information renewal unit 150 finished the above-described processes of steps S141, S142, S143 and S144 for the above member information, then with or without a predetermined time interval, the presence information renewal unit 150 will repeat the same sequential processes of steps S141, S142, S143 and S144 for other member informations.

In accordance with this second embodiment, three factors of the presence renewal control information are grouped to a unit for registration. For example, the presence information at the time of the message transmission, the effective time period, and the presence information at the time when the effective time period just expired are grouped to the unit for registration. It is also possible that those three factors be registered independently and separately from each other. For example, only the effective time period is unique. In this case, the above verification process for verifying the uniqueness may be made for each factor. If any unique factor is set, then the renewal is made in accordance with the unique factor. If any unique factor is not set, then the renewal is made in accordance with the common factor previously set by the system administrator or the system manager.

As described above, the present second embodiment allows the user to set or designate his or her unique method for renewal of the presence information himself or herself.

### THIRD EMBODIMENT:

A third embodiment according to the present invention will be described in detail with reference to the drawings. Similarly to the above-described first embodiment, in accordance with the present third embodiment, the server 100 changes the presence information of the user into "on-line" when the server 100 has received the massage from the client of this user. In this third embodiment. In addition, the server 100 changes the presence information of the user into "on-line" when the server 100 has received any other signals from any other communication devices or functions such as a telephone device and a Web browser, which is possessed or owned by this user.

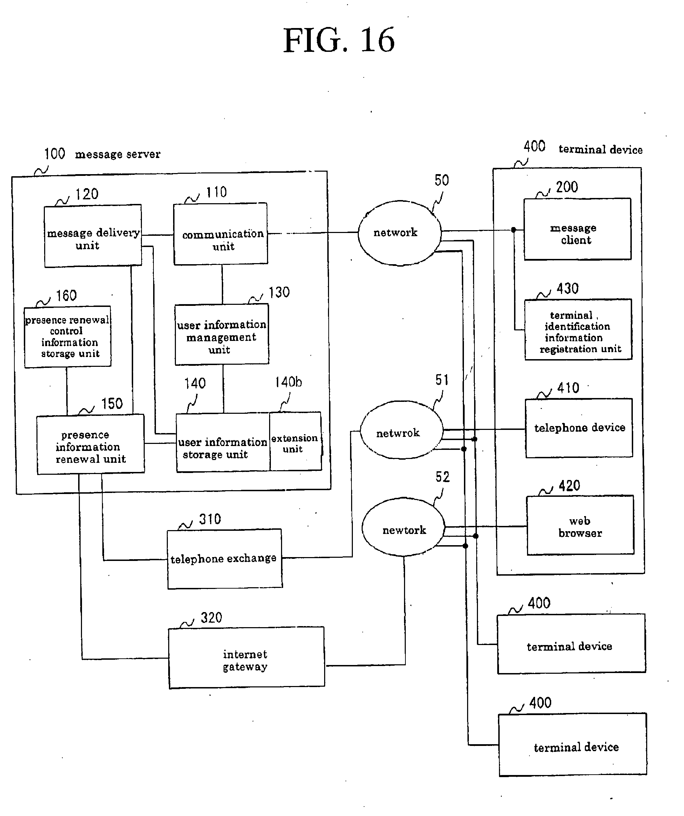

FIG 16 is a block diagram illustrative of a schematic configuration of a message system in a third embodiment in accordance with the present invention. The message system may include a message server 100, a plurality of terminal devices 400 of users, each of which is functionally and operationally coupled to the message server 100 through networks 50, 51 and 52. Each of the plural terminal devices 400 further includes a message client 200, a terminal identification information registration unit 430, a telephone device 410, and a Web browser 420.

The network 50 is to establish communications between the server 100 and the client 200 of each of the plural user's terminal devices 400. The server 100 may typically include, but not limited to, a communication unit 110, a message delivery unit 120, an user information management unit 130, an user information storage unit 140 with an extension unit 140b, a presence information renewal unit 150 and a presence renewal control information storage unit 160. The communication unit 110, the message delivery unit 120, the user information management unit 130, the presence information renewal unit 150 and the presence renewal control information storage unit 160 of this third embodiment are identical with the above described units of the first embodiment. The user information storage unit 140 of this third embodiment further has an extension unit 140b which stores respective presence renewal control informations for respective users separately. Further provision of the extension unit 140b differentiates the configuration of the server 100 of this third embodiment from the above-described server 100 of the first embodiment.

The client 200 of each of the user's terminal devices 400 enables the user of this terminal device 400 to transmit or receive messages to or from the other users through the above-described server 100, as well as to confirm the respective presence informations of the respective members included in the communication group member list which has previously been stored in the user information storage unit 140, wherein the respective presence informations are stored in the extension unit 140b.

The each client 200 may include, but not limited to, a communication unit 210, a message transmitting receiving unit 220, a communication group member list management unit 230 and a presence renewal control information registration unit 240. The communication unit 210, the message transmitting receiving unit 220, and the communication group member list management unit 230 of this third embodiment are identical with the above-described units of the first embodiment. Further provision of the presence renewal control information registration unit 240 differentiates the configuration of the client 200 of this second embodiment from the above-described client 200 of the first embodiment.

Each of the terminal device 400 further includes the telephone device 410 which is connected through the network 51 to a telephone exchange 310 which is further connected to said presence information renewal unit 150 of said server 100. Each of the terminal device 400 furthermore includes the Web browser 420 which is connected through the network 52 to an Internet gateway 320 which is further connected to said presence information renewal unit 150 of said server 100. Each of the terminal device 400 moreover includes the terminal identification information registration unit 430 which is connected through the network 50 to the communication unit 110 of the server 100.

It is possible as a modification that at least two of the client 200, the telephone device 410 and the Web browser 420 are connected through the same network to the communication unit 110 of the server 100, the telephone exchange 310 and the Internet gateway 320, respectively. If the network 50 comprises the Internet, then the client 200 and at least the Web browser 420 are connected through this Internet to the communication unit 110 of the server 100 and the Internet gateway 320, respectively. If the network 50 comprises the Internet and the telephone device comprises an Internet telephone device, then the client 200, the telephone device 410 and the Web browser 420 are connected through this Internet to the communication unit 110 of the server 100, the Internet gateway 320, and the Internet gateway 320, respectively.

The terminal identification information registration unit 430 of each of the terminal devices 400 is connected through the network 50 to the communication unit 110 of the server 100, so that the terminal identification information registration unit 430 registers a terminal identification information thereof onto the server 100. The terminal identification information may comprise any identifier which allows the telephone exchange 310 to definitely identify the terminal device 400 which includes the telephone device 410 which has sent a telephone call or the Internet gateway 320 to definitely identify the terminal device 400 which includes the Web browser 420 which has had an access to the Internet. Examples of available identifiers may include, but not limited to, a calling telephone number, an identifier uniquely assigned to each terminal device 400 and an IP address.

As described above, the presence information renewal unit 150 is connected to the telephone exchange 310 and the Internet gateway 320. Further, the user information storage unit 140 has the extension unit 140b which stores the respective terminal identification informations belonging to the terminal devices 400, wherein the respective terminal identification informations have been sent from the terminal identification information registration unit 430 of each of the terminal devices 400.

The telephone exchange 310 notifies the terminal identification information, which belongs to the terminal device 400 including the telephone device 410 which has sent a call, to the presence information renewal unit 150 of the server 100.

The Internet gateway 320 notifies the terminal identification information, which belongs to the terminal device 400 including the Web browser 420 which has had an access to the server 100 to the Internet, to the presence information renewal unit 150 of the server 100.

The presence information renewal unit 150 receives the terminal identification information from either one of the telephone exchange 310 and the Internet gateway 320, and then renews a presence information of a user who owns or possesses the terminal device 400 having the same terminal identification information as that shored in the extension unit 140b, wherein the renewal is made based on the presence renewal control information stored in the presence renewal control information storage unit 160.

The following descriptions will focus on differences in operations and function between the present message system of this third embodiment and the above-described message system of the above first embodiment.

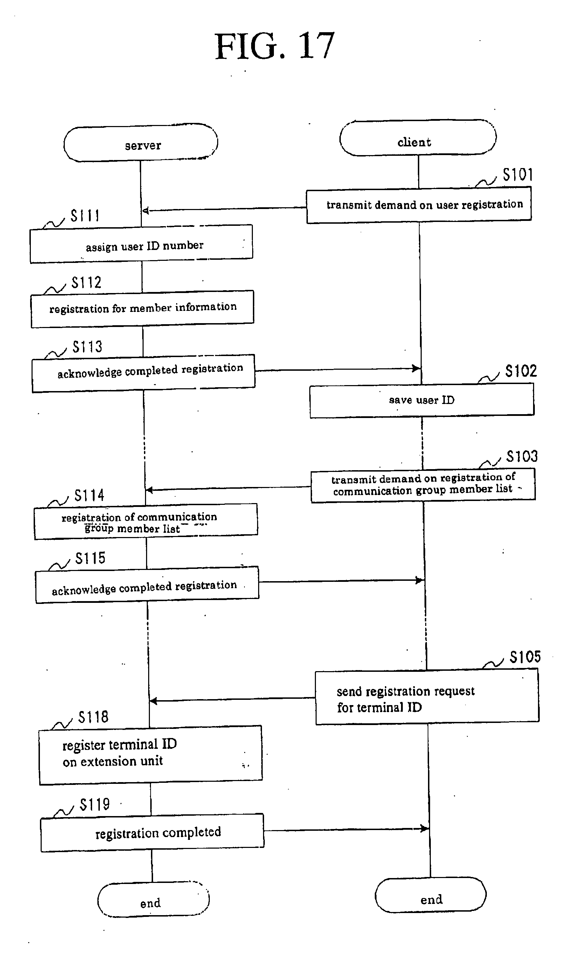

FIG. 17 is a flow chart illustrative of registration operations of registering the user's IDs and the communication group member lists onto the server 100 from the client 200.

In step S101, the user of the client 200 instructs the communication group member list management unit 230 to commence an user registration onto the server 100, so that the communication group member list management unit 230 sends a request for user registration to the server 100 through the communication unit 210 and the network 50.

In step S111, the user information management unit 130 in the server 100 receives the request for user registration through the communication unit 110, so that the user information management unit 130 allocates or assigns a unique user identification number (user ID) to the request for user registration or to this user.

In step S112, the user information management unit 130 creates a new member information which includes this allocated user ID and a terminal identification information, and registers the member information onto the user information storage unit 140. The allocated user ID is indicated, and the member list is null or vacant, and the presence information is initially and provisionally set "off-line" and the effective time period is also initially and provisionally set "none". The terminal identification information is initially set "none".

In step S113, after the user information management unit 130 finished the above registration operation of the member information, then the user information management unit 130 sends a notice of user registration completion to the client 200 which has sent this request for user registration. The notice of user registration completion includes the allocated user ID. The notice of user registration completion notifies or informs this client 200 of the allocated user ID and the completion of the user registration.

In step S102, the communication group member list management unit 230 in the client 200 holds and manages the allocated user ID which is included in the notice of user registration completion from the server 100. The user ID is to be utilized to identify the client 200 which requests the registration of the communication group member list and also requests the message transmission.

In step S103, the user of the client 200 enters an instruction to register the communication group member list which designates other user's identification numbers (other user's IDs) of communication counter-parts, to which this user intends to communicate. In accordance with the user's entered instruction, the communication group member list management unit 230 sends a request for registration of the communication group member list including the designated other user's identification numbers (other user's IDs), together with the ID allocated to this user of the client 200, to the server 100 through the communication unit 210 and the network 50.

It is optionally possible that the server 100 provides the client 200 with an additional retrieval service for retrieving the other user's IDs, so that each user is enabled to confirm respective IDs of other users who are included in the communication group member list registered on the server 100.

In step S114, the user information management unit 130 in the server 100 receives the request for registration of the communication group member list from the client 200 through the communication unit 110. The user information management unit 130 retrieves, from the user information storage unit 140, member informations which possess the same user's IDs as the user ID of this requester. The user information management unit 130 registers the user's IDs of the communication counter-parts onto the communication group member list of the retrieved member informations.

In step S115, the user information management unit 130 sends a notice of completion of the registration of the communication group member list to the client 200 of this requester.

In step S105, the user of the terminal device 400 enters a terminal identification information into the terminal identification information registration unit 430 of the terminal device 400 and instructs the terminal identification information registration unit 430 to register the entered terminal identification information onto the server 100. Upon receipt of this user's instruction, the terminal identification information registration unit 430 sends a request for registration, which includes the user's ID of this requester and the entered terminal identification information, to the user information management unit 130 of the server 100 through the network 50.

In step S118, the user information management unit 130 receives this request for registration and then retrieves a member information, which has the same user's ID as that of the requester designed by the received request, from the user information storage unit 140, so that the user information management unit 130 stores the terminal identification information included in the received request into a space for storing terminal identification information created in the extension unit 140b, wherein the space corresponds to the retrieved member information.

In step S119, the user information management unit 130 sends a notice of completion of the registration of the terminal identification information to the terminal device 400 of this requester.

The contents of the registered terminal identification information may be changed at anytime by transmitting a request for change to the terminal identification information from the terminal identification information registration unit 430 of the terminal device 400 of this requester to the user information management unit 130 of the server 100.

In the above typical example, the user operates the terminal device 400 to have an access to the server 100 for registration of the terminal identification information. It is also possible as a modification that the user uses any other available access method of an access to the server 100 for registration of the terminal identification information. A typical example of the other available access method may be using a Web browser operable on any available computer such as a personal computer.

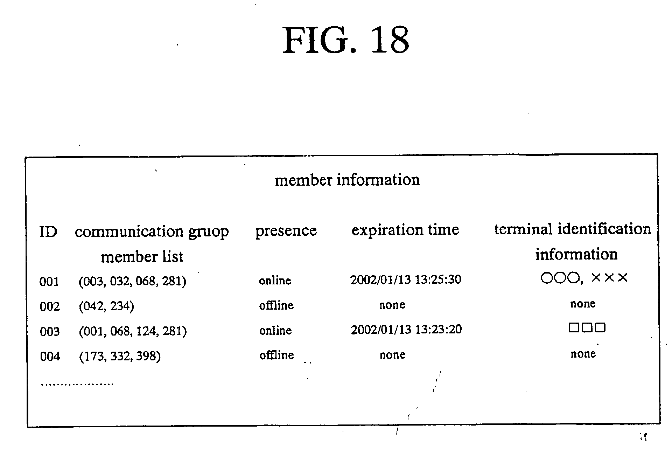

FIG 18 is a view of one example of the member informations stored in the user information storage unit 140 with the extension unit 140b. The user information storage unit 140 stores a plurality of user's informations including the user's presence informations, which will be referred to as member informations in descriptions to be made with reference to FIG 18. Member informations respectively correspond to the respective user's terminal devices 400. Each of the member informations may typically include, but not limited to, an user's identification number (user ID), a communication group member list which designates all of the members, to which this user intends to communicate, a presence information of this user, an effective time period or an expiration time of the presence information, and a terminal identification information.

The user information storage unit 140 stores the user's identification number (user ID), the communication group member list, the presence information, and the effective time period or the expiration time of the presence information. The extension unit 140b stores the terminal identification information. The terminal identification information "absence" or "none" means that any terminal identification information has not yet been set. The registration of the terminal identification information is optional to the each user. If the user does not intend to renew the presence information himself or herself upon telephone call, the registration of the terminal identification information is unnecessary. Usually, the user may use the telephone device 410 and the Web browser 420 included in the same terminal device 400. In this case, the registration of the single terminal identification information is necessary. If, however, the user may use the telephone device 410 and the Web browser 420 included in different terminal devices 400 assigned with different terminal identification informations, then the registration of at least one of two different terminal identification informations may be possible, depending on the user's intention.

The registered terminal identification information of the terminal device 400 is referred by the server 100 for renewing the presence information of this user.

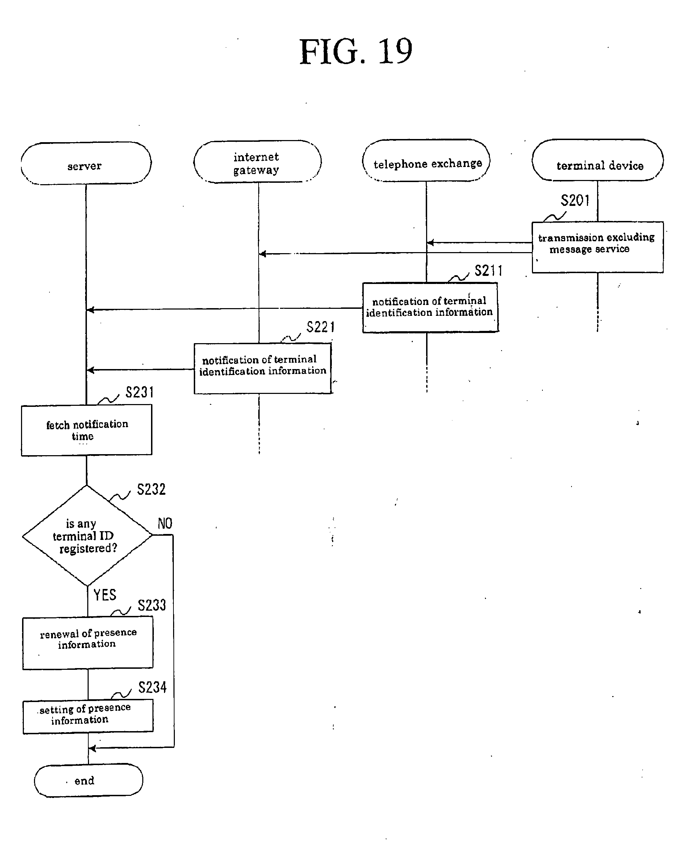

Operations of the present message system when the user of the terminal device 400 communicates to the server 100 through the telephone device 410 and the Web browser 420 will be described. FIG 19 is a flow chart illustrative of operations of the present message system when the user of the terminal device 400 communicates to the server 100 through the telephone device 410 and the Web browser 420.

In step S201, the user of the terminal 400 calls the server 100 through the telephone device 410 or has an access to the server 100 through the Web browser 420.

In step S211, in response to the telephone call from the telephone device 410, the telephone exchange 310 notifies the terminal identification information of the terminal device 400 to the presence information renewal unit 150 of the server 100.

In step S221, in response to the access from the Web browser 420, the Internet gateway 320 notifies the terminal identification information of the terminal device 400 to the presence information renewal unit 150 of the server 100.

In step S231, the presence information renewal unit 150 of the server 100 receives the terminal identification information from the telephone exchange 310 or the Internet gateway 320, and fetches, from an internal timer, a receiving time when the terminal identification information is received by the presence information renewal unit 150, so that the presence information renewal unit 150 temporary holds the receiving time.

In step S232, the presence information renewal unit 150 retrieves any member information which has the same terminal identification information as the received terminal identification information, from the extension unit 140b. If no such member information exists, then the process is finished.

In step S233, if a member information which has the same terminal identification information has been retrieved, then the presence information renewal unit 150 renews the current presence information included in the retrieved member information into a new presence information at a time of message transmission, which has been set in the presence renewal control information storage unit 160.

In step S234, the presence information renewal unit 150 decides a new effective time period for the just-renewed presence information based on the effective time period related information set in the presence renewal control information storage unit 160 and the fetched receiving time, and then set the new effective time period in the retrieved member information. For example, the presence renewal control information as shown in FIG 3 has been set in the presence renewal control information storage unit 160. The communication between the server 100 and the terminal device 400 is caused by either the telephone device 410 or the Web browser 420. The presence information renewal unit 150 receives the terminal identification information of the terminal device 400 from either the telephone exchange 310 or the Internet gateway 320 at a time "2002/01/13 13:10:30". In this case, the presence information renewal unit 150 renews the presence information of the terminal device 400 into "on-line" and changes the expiration time into "2002/01/13 13:25:30".

Other operations than what has been described above are the same as those of the first embodiment.

This embodiment responds to the terminal device 400 which includes not only the client 200 related to the message service but also the other communication devices such as the telephone device 410 and the Web browser 420, wherein the presence information of the user of the terminal device may be renewed by triggering the event that the communication has been made through the other communication devices.

In this example, the other communication devices are the telephone device 410 and the Web browser 420. The other communication devices may also include not only the telephone device 410 and the Web browser 420 but also a facsimile device and any other available communication devices.

### FOURTH EMBODIMENT :

A fourth embodiment according to the present invention will be described in detail with reference to the drawings. Similarly to the above-described first embodiment, in accordance with the present third embodiment, the server 100 changes the presence information of the user into "on-line" when the server 100 has received the massage from the client of this user. In this third embodiment. In addition, the server 100 changes the presence information of the user into "on-line" when the server 100 has received any other signals from any other communication devices or functions such as a telephone device and a Web browser, which is possessed or owned by this user. These are similar to the third embodiment. This fourth embodiment is however different from the above third embodiment in view of further providing, in the server 100, three separate presence renewal control information storage units for storing separate presence renewal control informations to be used for renewals of the presence information based on a first event of the message transmission, a second event of the telephone cell and a third event of the access through the Web browser.

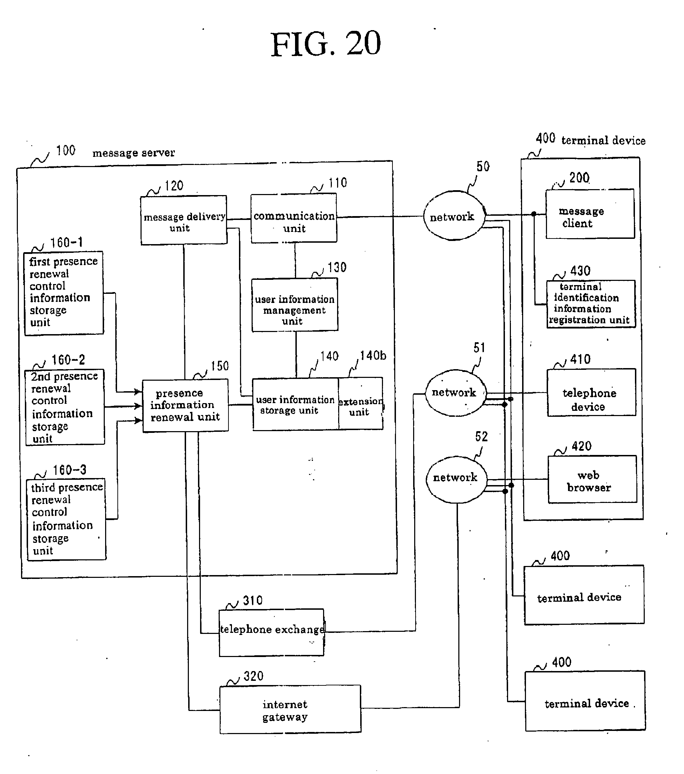

FIG 20 is a block diagram illustrative of a schematic configuration of a message system in a fourth embodiment in accordance with the present invention. The message system may include a message server 100, a plurality of terminal devices 400 of users, each of which is functionally and operationally coupled to the message server 100 through networks 50, 51 and 52. Each of the plural terminal devices 400 further includes a message client 200, a terminal identification information registration unit 430, a telephone device 410, and a Web browser 420.

The network 50 is to establish communications between the server 100 and the client 200 of each of the plural user's terminal devices 400. The server 100 may typically include, but not limited to, a communication unit 110, a message delivery unit 120, an user information management unit 130, an user information storage unit 140 with an extension unit 140b, a presence information renewal unit 150 and first, second and third presence renewal control information storage units 160-1, 160-2 and 160-3. The communication unit 110, the message delivery unit 120, the user information management unit 130 and the presence information renewal unit 150 of this fourth embodiment are identical with the above described units of the first embodiment. The user information storage unit 140 of this fourth embodiment further has an extension unit 140b which stores respective presence renewal control informations for respective users separately. Further provision of the extension unit 140b differentiates the configuration of the server 100 of this fourth embodiment from the above-described server 100 of the first embodiment.

Further, the first, second and third presence renewal control information storage units 160-1, 160-2 and 160-3 are separately provided for storing first, second and third presence renewal control informations for renewing the presence information by triggering the first event of the message transmission from the client 200 in the terminal device 400, the second event of the telephone cell from the telephone device 410 in the terminal device 400 and the third event of the Internet access from the Web browser 420.

In response to the message transmission from the client 200 in the terminal device 400, the renewal operation is made in accordance with the first presence renewal control information stored in the first presence renewal control information storage unit 160-1.

In response to the telephone call from the telephone device 410 in the terminal device 400, the renewal operation is made in accordance with the second presence renewal control information stored in the second presence renewal control information storage unit 160-2.

In response to the Internet access from the Web browser 420 in the terminal device 400, the renewal operation is made in accordance with the third presence renewal control information stored in the third presence renewal control information storage unit 160-3.

The client 200 of each of the user's terminal devices 400 enables the user of this terminal device 400 to transmit or receive messages to or from the other users through the above-described server 100, as well as to confirm the respective presence informations of the respective members included in the communication group member list which has previously been stored in the user information storage unit 140, wherein the respective presence informations are stored in the extension unit 140b.

The each client 200 may include, but not limited to, a communication unit 210, a message transmitting receiving unit 220, a communication group member list management unit 230 and a presence renewal control information registration unit 240. The communication unit 210, the message transmitting receiving unit 220, and the communication group member list management unit 230 of this third embodiment are identical with the above-described units of the first embodiment. Further provision of the presence renewal control information registration unit 240 differentiates the configuration of the client 200 of this second embodiment from the above-described client 200 of the first embodiment.

Each of the terminal device 400 further includes the telephone device 410 which is connected through the network 51 to a telephone exchange 310 which is further connected to said presence information renewal unit 150 of said server 100. Each of the terminal device 400 furthermore includes the Web browser 420 which is connected through the network 52 to an Internet gateway 320 which is further connected to said presence information renewal unit 150 of said server 100. Each of the terminal device 400 moreover includes the terminal identification information registration unit 430 which is connected through the network 50 to the communication unit 110 of the server 100.

It is possible as a modification that at least two of the client 200, the telephone device 410 and the Web browser 420 are connected through the same network to the communication unit 110 of the server 100, the telephone exchange 310 and the Internet gateway 320, respectively. If the network 50 comprises the Internet, then the client 200 and at least the Web browser 420 are connected through this Internet to the communication unit 110 of the server 100 and the Internet gateway 320, respectively. If the network 50 comprises the Internet and the telephone device comprises an Internet telephone device, then the client 200, the telephone device 410 and the Web browser 420 are connected through this Internet to the communication unit 110 of the server 100, the Internet gateway 320, and the Internet gateway 320, respectively.

The terminal identification information registration unit 430 of each of the terminal devices 400 is connected through the network 50 to the communication unit 110 of the server 100, so that the terminal identification information registration unit 430 registers a terminal identification information thereof onto the server 100. The terminal identification information may comprise any identifier which allows the telephone exchange 310 to definitely identify the terminal device 400 which includes the telephone device 410 which has sent a telephone call or the Internet gateway 320 to definitely identify the terminal device 400 which includes the Web browser 420 which has had an access to the Internet. Examples of available identifiers may include, but not limited to, a calling telephone number, an identifier uniquely assigned to each terminal device 400 and an IP address.

The following descriptions will focus on differences of the fourth embodiment from the third embodiment.

The first presence renewal control information has previously been stored by the system administrator or the system manager in the first presence renewal control information storage unit 160-1, wherein the first presence renewal control information is to be used for renewing the presence information in response to the message transmission from the client 200 in the terminal device 400. The contents of the first presence renewal control information may be the same as shown in FIG 3.

The second presence renewal control information has previously been stored by the system administrator or the system manager in the second presence renewal control information storage unit 160-2, wherein the second presence renewal control information is to be used for renewing the presence information in response to the telephone call from the telephone device 410 in the terminal device 400. The formats of the second presence renewal control information may be the same as shown in FIG 3, but the contents of the second presence renewal control information are unique and different from the contents shown in FIG. 3.

The third presence renewal control information has previously been stored by the system administrator or the system manager in the third presence renewal control information storage unit 160-3, wherein the third presence renewal control information is to be used for renewing the presence information in response to the Internet access from the Web browser 420 in the terminal device 400. The formats of the third presence renewal control information may be the same as shown in FIG 3, but the contents of the third presence renewal control information are unique and different from the contents shown in FIG 3.

For example, the message transmission takes a short time, while the telephone communication or the Internet access may tale longer times as compared to the message transmission. For this reason, it may be preferable to set longer effective time periods for the second and third presence renewal control informations for the telephone communication or the Internet access as compared to the effective time period for the first presence renewal control information for the message transmission.

As shown in FIG 3, no time condition is provided for the first presence renewal control information to be used for the renewal of the presence information in response to the message transmission. In order to prevent any message from other user to a user who are now on the telephone communication or the Internet access, any time condition may be provided for the second and third presence renewal control informations to be used for the renewal of the presence information in response to the telephone call and the Internet access. Examples of such time condition may be that the renewal is made when a predetermined time has passed from initiation times of the telephone communication or the Internet access. Also further time conditions may be provided for the renewal of the presence information after the effective time period has expired.

As described above, the present fourth embodiment is different from the third embodiment in view of further providing the first, second and third presence renewal control information storage units 160-1, 160-2 and 160-3 for separately storing first, second and third presence renewal control informations for renewing the presence information by triggering the first event of the message transmission from the client 200 in the terminal device 400, the second event of the telephone cell from the telephone device 410 in the terminal device 400 and the third event of the Internet access from the Web browser 420.

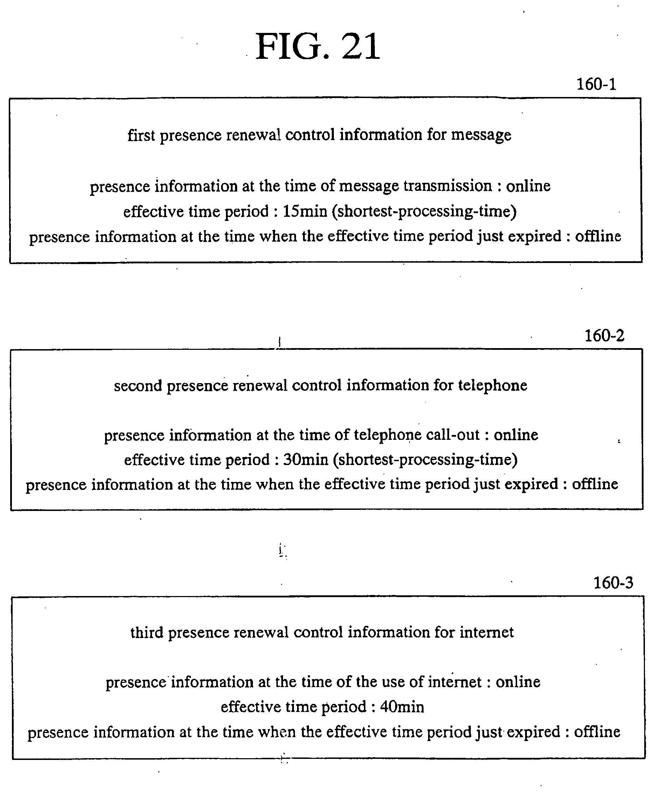

FIG 21 is a view illustrative of one example of the first, second and third presence renewal control informations which have been set on the first, second and third presence renewal control information storage units 160-1, 160-2 and 160-3, respectively.

For the first presence renewal control informations for renewing the presence information in response to the message transmission, The presence information is renewed to "on-line" at a message transmission time. The effective time period of the renewed presence information is at least 15 minutes from the message transmission time. When the effective time period expires, then the presence information "on-line" is renewed to "off-line". The above effective time period may be optional. Instead of the effective time period, the expiration time may be set, which designates the exact time when the last-renewed presence information becomes ineffective.

For the second presence renewal control informations for renewing the presence information in response to the telephone call, the presence information at a telephone call time is renewed to "on-line". The effective time period of the renewed presence information is at least 30 minutes from the telephone call time. When the effective time period expires, then the presence information "on-line" is renewed to "off-line". The above effective time period may be optional. Instead of the effective time period, the expiration time may be set, which designates the exact time when the last-renewed presence information becomes ineffective.

For the third presence renewal control informations for renewing the presence information in response to the telephone call, the presence information at an Internet access time is renewed to "on-line". The effective time period of the renewed presence information is 40 minutes from the Internet access time. When the effective time period expires, then the presence information "on-line" is renewed to "off-line". The above effective time period may be optional. Instead of the effective time period, the expiration time may be set, which designates the exact time when the last-renewed presence information becomes ineffective.

The above effective time periods of "at least 15 minutes" and "at least 30 minutes" mean that if the currently set effective time periods are longer than 15 minutes and 30 minutes, respectively. These effective time periods are continuously used without change.

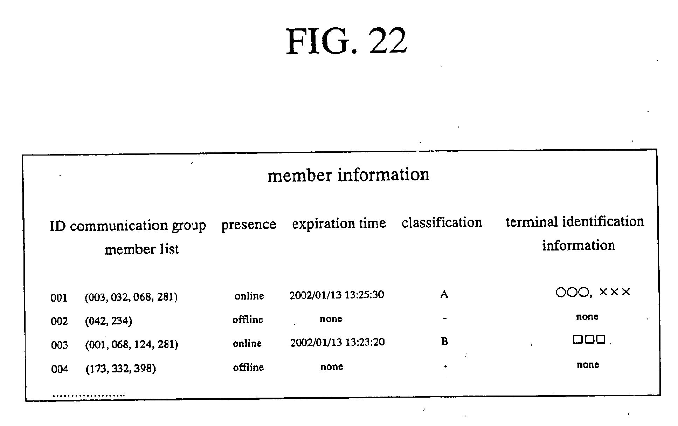

FIG. 22 is a view of one example of the member informations stored in the user information storage unit 140 with the extension unit 140b. The user information storage unit 140 stores a plurality of user's informations including the user's presence informations, which will be referred to as member informations in descriptions to be made with reference to FIG 22. Member informations respectively correspond to the respective user's terminal devices 400. Each of the member informations may typically include, but not limited to, an user's identification number (user ID), a communication group member list which designates all of the members, to which this user intends to communicate, a presence information of this user, an effective time period or an expiration time of the presence information, a type of communication, and a terminal identification information. The communication type "A" represents "message transmission". The communication type "B" represents "telephone call". The communication type "C" represents "Internet access".

The user information storage unit 140 stores the user's identification number (user ID), the communication group member list, the presence information, and the effective time period or the expiration time of the presence information. The extension unit 140b stores the communication type and the terminal identification information. The terminal identification information "absence" or "none" means that any terminal identification information has not yet been set. The registration of the terminal identification information is optional to the each user. If the user does not intend to renew the presence information himself or herself upon telephone call, the registration of the terminal identification information is unnecessary. Usually, the user may use the telephone device 410 and the Web browser 420 included in the same terminal device 400. In this case, the registration of the single terminal identification information is necessary. If, however, the user may use the telephone device 410 and the Web browser 420 included in different terminal devices 400 assigned with different terminal identification informations, then the registration of at least one of two different terminal identification informations may be possible, depending on the user's intention.

The registered terminal identification information of the terminal device 400 is referred by the server 100 for renewing the presence information of this user.

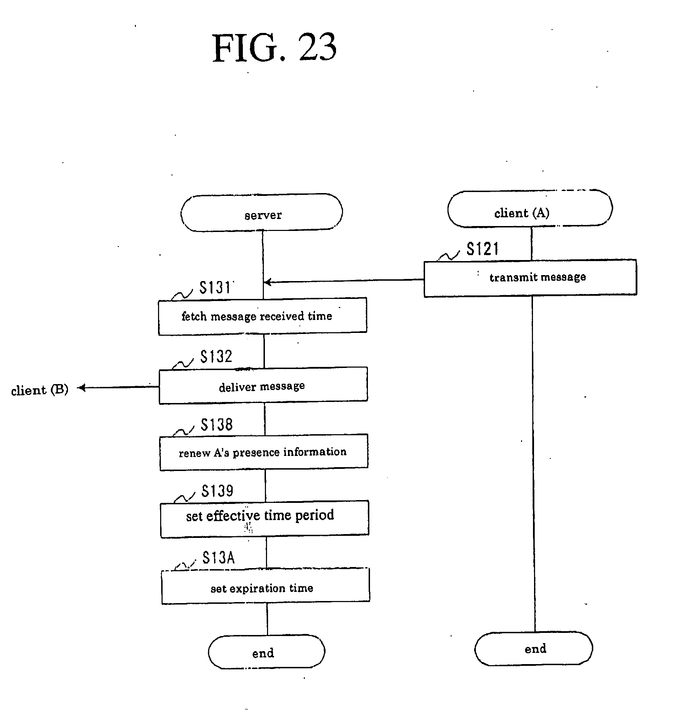

Subsequently, operations of the message system for transmission and receipt of one or more messages between the clients 200 through the server 100 will be described. In this descriptions, a first user, who transmits or sends one or more messages, will be referred to as user "A", and a second user, who is a destination of the message for receiving the message, will be referred to as user "B". FIG. 23 is a flow chart illustrative of an example of operations of the message system for transmission and receipt of one or more messages between the clients 200 through the server 100.

In step S121, the user "A" instructs the message transmitting receiving unit 220 of the client 200 to create a message and also designates a user ID of the user "B" as a message destination, and enters a request for transmission of the message into the message transmitting receiving unit 220. Upon receipt of the request for transmission of the message from the user "A", the message transmitting receiving unit 220 adds the message with a transmission header which includes the user ID of the user "B" as the message receiver and the user ID of the user "A" as the message sender. The message transmitting receiving unit 220 sends the message with the transmission header to the message delivery unit 120 in the server 100 through the communication unit 210 and the network 50.

In step S131, the message delivery unit 120 in the server 100 receives the message from the client 200 of the user "A", and fetches a message received time from an internal timer in the server 100 and temporary stores the message with the message received time.

In step S132, the message delivery unit 120 sends the message of the user "A" to the message transmitting receiving unit 220 of the client 200 of the user "B" as the destination, who has the user ID designated by the user "A". The message transmitting receiving unit 220 of the client 200 of the user "B" receives the message of the user "A" and represents or displays the message to the user "B". If the message delivery unit 120 of the server 100 is unable to access to the client 200 of the user "B", then the message delivery unit 120 may optionally send a notice to the effect that any access to the client 200 of the user "B" is not available now. Otherwise, the message delivery unit 120 may repeat re-sending operations of the message to the client 200 of the user "B" predetermined times and only when any access to the client 200 of the user "B" is not yet available, then the message delivery unit 120 may first send a notice to the effect that any access to the client 200 of the user "B" has been available.

In step S138, the message delivery unit 120 transmits the message receiving time and the user ID of the user "A" as the message sender to the presence information renewal unit 150, so that the presence information renewal unit 150 renews the presence information included in the member information belonging to the user "A", in accordance with the renewed presence information at the message transmitting time involved in the first presence renewal control information stored in the first presence renewal control information storage unit 160-1. Namely, the presence information renewal unit 150 retrieves the member information which has the same ID as the user ID of the usr "A" from the user information storage unit 140, and renews the presence information included in the retrieved member information into a presence information at the message transmitting time, in accordance with the renewed presence information at the message transmitting time involved in the first presence renewal control information stored in the first presence renewal control information storage unit 160-1.

In step S139, the presence information renewal unit 150 decides a new effective time period or a new expiration time of the just-renewed presence information based on the above-described message received time and also based on an information related to the effective time period, which has been set in the first presence renewal control information storage unit 160-1. The presence information renewal unit 150 sets the decided new effective time period or expiration time in the member information but only when the new effective time period will expire prior to the expiration of the current effective time period or the new expiration time is prior to the current expiration time. Otherwise, the presence information renewal unit 150 leaves the current effective time period or the current expiration time.

In step S13A, the presence information renewal unit 150 sets the first communication type "A" which indicates that the presence information has been renewed in response to the message transmission.

It is assumed that the first presence renewal control information storage unit 160-1 of the sever 100 has the first presence renewal control information as shown in FIG 21. If the message is sent by the client 200 of the user "A" at a time "2002/01/13 13:10:30", then the presence information renewal unit 150 renews the presence information and its expiration time "2002/01/13 13:10:30" of the user "A" stored in the user information storage unit 140 into "on-line" and "2002/01/13 13:25:30", respectively, and further sets the communication type "A". If the already set expiration time is "2002/01/13 13:25:30", then no change is made to the expiration time.

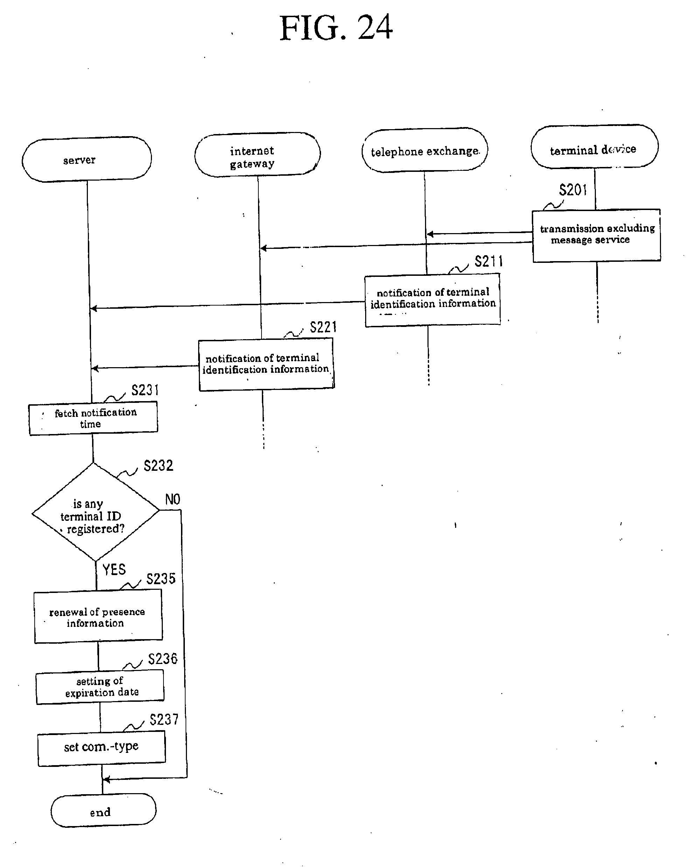

Operations of the present message system when the user of the terminal device 400 communicates to the server 100 through the telephone device 410 and the Web browser 420 will be described. FIG 24 is a flow chart illustrative of operations of the present message system when the user of the terminal device 400 communicates to the server 100 through the telephone device 410 and the Web browser 420.

In step S201, the user of the terminal 400 calls the server 100 through the telephone device 410 or has an access to the server 100 through the Web browser 420.

In step S211, in response to the telephone call from the telephone device 410, the telephone exchange 310 notifies the terminal identification information of the terminal device 400 to the presence information renewal unit 150 of the server 100.

In step S221, in response to the access from the Web browser 420, the Internet gateway 320 notifies the terminal identification informations of the terminal device 400 to the presence information renewal unit 150 of the server 100.

In step S231, the presence information renewal unit 150 of the server 100 receives the terminal identification information from the telephone exchange 310 or the Internet gateway 320, and fetches, from an internal timer, a receiving time when the terminal identification information is received by the presence information renewal unit 150, so that the presence information renewal unit 150 temporary holds the receiving time.

In step S232, the presence information renewal unit 150 retrieves any member information which has the same terminal identification information as the received terminal identification information, from the extension unit 140b. If no such member information exists, then the process is finished.

In step S235, if a member information which has the same terminal identification information has been retrieved, then the following renewal process will be conducted. If this notice has been made in response to the telephone call, then the presence information renewal unit 150 renews the current presence information included in the retrieved member information into a new presence information designated by the second presence renewal control information which has been set in the second presence renewal control information storage unit 160-2. If this notice has been made in response to the Internet access, then the presence information renewal unit 150 renews the current presence information included in the retrieved member information into a new presence information designated by the third presence renewal control information which has been set in the third presence renewal control information storage unit 160-3.

In step S236, if the above renewal has been made in response to the telephone call, the presence information renewal unit 150 decides a new effective time period for the just-renewed presence information based on the effective time period designated by the second presence renewal control information which has been set in the second presence renewal control information storage unit 160-2 and based on the fetched receiving time. The presence information renewal unit 150 compares the decided new effective time period or expiration time to the current effective time period or expiration time. The presence information renewal unit 150 sets the decided new effective time period or expiration time in the member information but only when the new effective time period will expire prior to the expiration of the current effective time period or the new expiration time is prior to the current expiration time. Otherwise, the presence information renewal unit 150 leaves the current effective time period or the current expiration time.

If the above renewal has been made in response to the Internet access, the presence information renewal unit 150 decides a new effective time period for the just-renewed presence information based on the effective time period designated by the third presence renewal control information which has been set in the third presence renewal control information storage unit 160-3 and based on the fetched receiving time. The presence information renewal unit 150 compares the decided new effective time period or expiration time to the current effective time period or expiration time. The presence information renewal unit 150 sets the decided new effective time period or expiration time in the member information but only when the new effective time period will expire prior to the expiration of the current effective time period or the new expiration time is prior to the current expiration time. Otherwise, the presence information renewal unit 150 leaves the current effective time period or the current expiration time.

In step S237, if the above renewal has been made in response to the telephone call, then the presence information renewal unit 150 sets the second communication type "B" which indicates that the presence information has been renewed in response to the telephone call.

If the above renewal has been made in response to the Internet access, then the presence information renewal unit 150 sets the third communication type "C" which indicates that the presence information has been renewed in response to the Internet access.

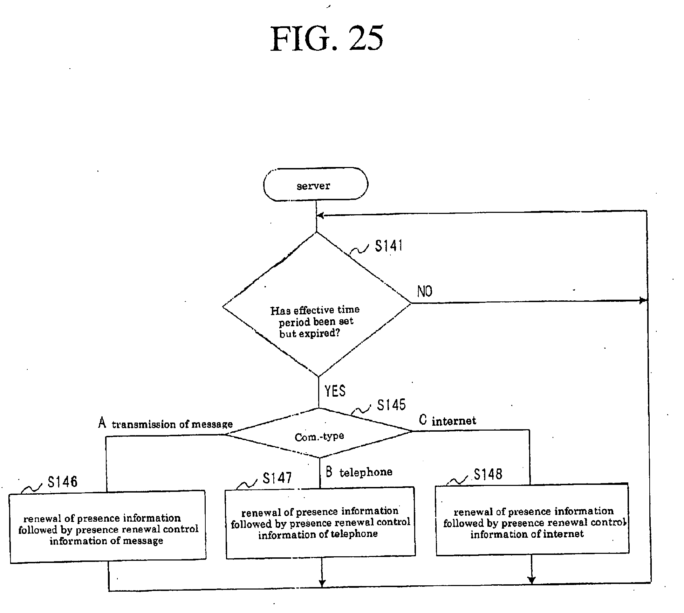

Renewal operations made by the presence information renewal unit 150 of the server 100 to the member informations of all the users registered on the user information storage unit 140 of the server 100 will subsequently be described. FIG 25 is a flow chart illustrative of renewal operations made by the presence information renewal unit 150 of the server 100 to the member informations of all the users registered on the user information storage unit 140 of the server 100. The presence information renewal unit 150 of the server 100 performs respective renewal operations for respective member informations stored on the user information storage unit 140 separately.

In step S141, the presence information renewal unit 150 verifies whether any effective time period or any expiration time has already been set or not yet for the presence information included in the member information. If the effective time period or the expiration time has already been set, then the presence information renewal unit 150 further verifies whether the effective time period or the expiration time has already expired or not yet.

In step S145, if the effective time period or the expiration time has been set but already expired, then the presence information renewal unit 150 verifies the communication type "A", "B" or "C", in response to which the renewal should be made.

In step S146, if the communication type "A" is verified, then the presence information renewal unit 150 renews the presence information included in the member information in accordance with the first presence renewal control information which has been stored in the first presence renewal control information storage unit 160-1.

In step S147, if the communication type "B" is verified, then the presence information renewal unit 150 renews the presence information included in the member information in accordance with the second presence renewal control information which has been stored in the second presence renewal control information storage unit 160-2.

In step S148, if the communication type "C" is verified, then the presence information renewal unit 150 renews the presence information included in the member information in accordance with the third presence renewal control information which has been stored in the third presence renewal control information storage unit 160-3.

For example, if the first presence renewal control information storage unit 160-1 has the first presence renewal control information shown in FIG 21, then the presence information renewal unit 150 renews the presence information into "off-line". Further, the presence information renewal unit 150 sets no effective time period "none" for the effective time period of the presence information, and also deletes the communication type.

After the presence information renewal unit 150 finished the above-described processes of steps S141, S145, S146, S147 and S148 for the above member information, then with or without a predetermined time interval, the presence information renewal unit 150 will repeat the same sequential processes of S141, S145, S146, S147 and S148 for other member informations.

Other operations than what are described above are the same as in the first and third embodiments.

As described above, in accordance with the fourth embodiment, the presence information of the user may be renewed based on the different three presence renewal control informations separately stored in the different three presence renewal control information storage units, in response to the first event of the message transmission, the second event of the telephone call, and the third event of the Internet access.

### FIFTH EMBODIMENT:

A fifth embodiment according to the present invention will be described in detail with reference to the drawings. In the above-described first embodiment, the renewal of the presence information is automatically conducted in the server 100 based on the presence renewal control information which has been set by the system administrator or the system manager. The present fifth embodiment enables respective users to set respective presence informations which are unique to respective users.

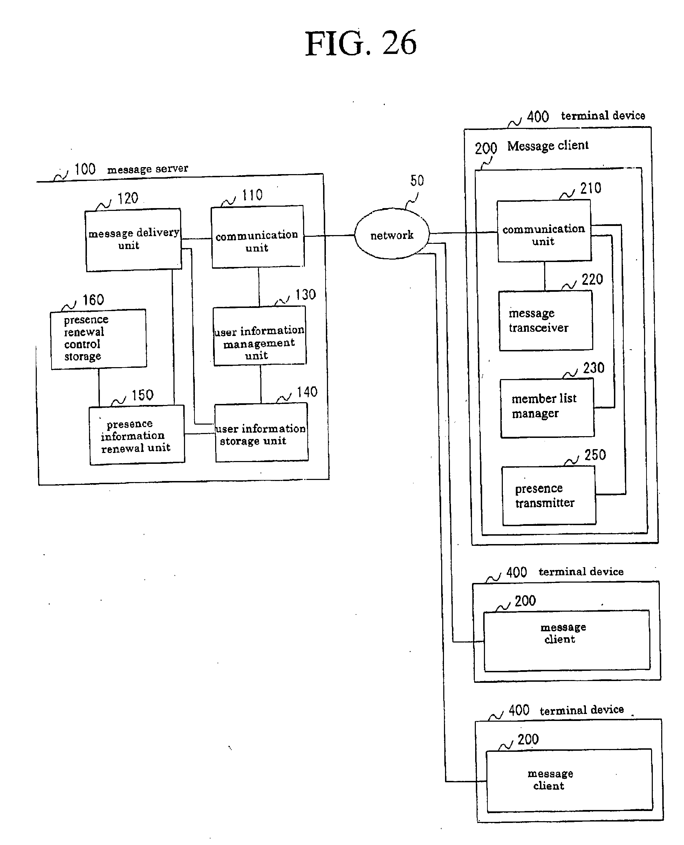

FIG 26 a block diagram illustrative of a schematic configuration of a message system in a fifth embodiment in accordance with the present invention. The message system may include a message server 100, a plurality of terminal devices 400 of users, each of which is functionally and operationally coupled to the message server 100 through a network 50. Each of the plural terminal devices 400 further includes a message client 200. The words "message server" and "message client" will, hereinafter be referred to as "server" and "client", respectively.

The network 50 is to establish communications between the server 100 and the client 200 of each of the plural user's terminal devices 400. The server 100 may typically include, but not limited to, a communication unit 110, a message delivery unit 120, an user information management unit 130, an user information storage unit 140, a presence information renewal unit 150 and a presence renewal control information storage unit 160. The communication unit 110, the message delivery unit 120, the user information management unit 130, the presence information renewal unit 150 and the presence renewal control information storage unit 160 of this second embodiment are identical with the above described units of the first embodiment. Namely, the configuration of the server 100 of this fifth embodiment is identical with the server 100 of the above described first embodiment.

The client 200 of each of the user's terminal devices 400 enables the user of this terminal device 400 to transmit or receive messages to or from the other users through the above-described server 100, as well as to confirm the respective presence informations of the respective members included in the communication group member list which has previously been stored in the user information storage unit 140.

The each client 200 may include, but not limited to, a communication unit 210, a message transmitting receiving unit 220, a communication group member list management unit 230 and a presence information transmitting unit 250. The communication unit 210, the message transmitting receiving unit 220, and the communication group member list management unit 230 of this second embodiment are identical with the above-described units of the first embodiment. Further provision of the presence information transmitting unit 250 differentiates the configuration of the client 200 of this fifth embodiment from the above-described client 200 of the first embodiment.

The following descriptions will focus on structural and functional differences of the present fifth embodiment from the above-described first embodiment.

The presence information transmitting unit 250 of the client 200 receives a designation to a presence information from the user, and sends a request for presence renewal, which includes the designated presence information to the server 100 through the communication unit 210 and the network 50. A typical example of the method of designating the presence information may be that some typical examples nominated as the presence information are displayed on a screen of the terminal device 400 for allowing the user to select desired ones of the nominated examples for the presence information. Another typical example of the method of designating the presence information may be that the user enters optional characters, words, phrase or sentence for the presence information. The following descriptions will be made assuming that the user's designated presence information comprises "presence" which means that the user is present in a room, and "absence" which means that the user is absent in the room. In response to the message transmission, the presence information is renewed to "on-line". After the effective time period has expired, then the presence information is renewed to "off-line". The presence informations "on-line" and "off-line" have previously been set in the server 100 by the system administrator or the system manager. Thus, there are four presence informations "presence", "absence", "on-line" and "off-line".

The presence renewal control information to be used for renewing the presence information in response to the message transmission from the client 200 of the terminal device 400 has previously been stored by the system administrator or the system manager in the presence renewal control information storage unit 160. The contents of the presence renewal control information may be optional, for example, may be as shown in FIG 3 or may allow the renewal of the presence information into the user's designated presence information. For example, in accordance with the presence renewal control information shown in FIG. 3, if the message transmission is caused, then the presence information is renewed into "on-line". This fifth embodiment allows the user to designate the presence informations to be used for the renewal of the presence informations. It may not be preferable in case that the user's designated presence information is renewed unconditionally. It may be possible, therefore, that any condition is provided for the renewal of the presence information in response to the message transmission. For example, the renewal of the presence information will be made in response to the message transmission, but only if the current presence information is either one of "on-line", "off-line" and "absence". Even if the message transmission appears, then the renewal of the presence information will not be made as long as the current presence information is "presence". If the user intentionally changes the presence information into "presence", then the presence information "presence" remains unchanged even the message transmission is made. If the current presence information is "absence", then the presence information "absence" is automatically renewed into the presence information "presence" in response to the message transmission.

The difference in operation of the message system of the present fifth embodiment from the above described first embodiment is that the user is allowed to designate one or more unique or original presence informations. The following descriptions will focus on the difference in operation of the message system of the present fifth embodiment from the above described first embodiment.

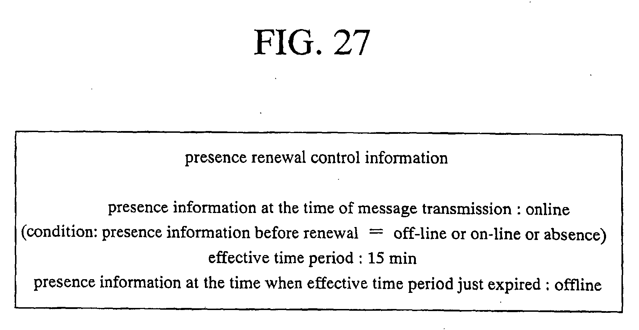

FIG 27 is a view illustrative of one example of the presence renewal control information set on the presence renewal control information storage unit 160. The presence information is renewed to "on-line" at a message transmission time but only if the presence information prior to the renewal is either one of "off-line", "on-line" and "absence". The effective time period of the renewed presence information is 15 minutes from the message transmission time. When the effective time period expires, then the presence information "on-line" is renewed to "off-line".

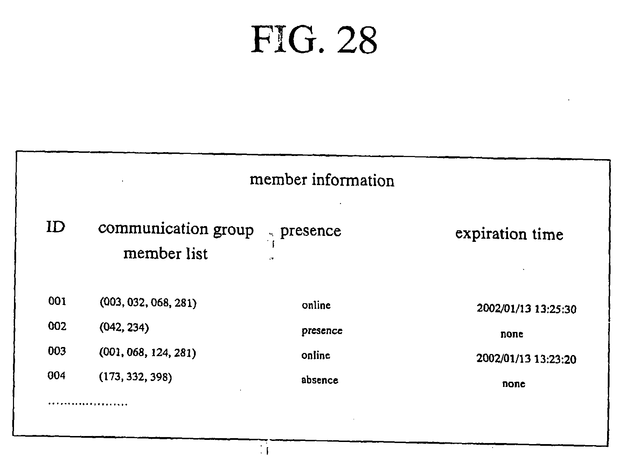

FIG 28 is a view of one example of the member informations stored in the user information storage unit 140. The user information storage unit 140 stores a plurality of user's informations including the presence informations, which will be referred to as member informations in descriptions to be made with reference to FIG. 28. Member informations respectively correspond to the respective clients 200 of the plural user's terminal devices 400. Each of the member informations may typically include, but not limited to, an user's identification number (user ID), a communication group member list which designates all of the members, to which this user intends to communicate, a presence information of this user, and an effective time period or an expiration time of the presence information. The presence information is either one of "on-line", "off-line", "absence" and "presence".

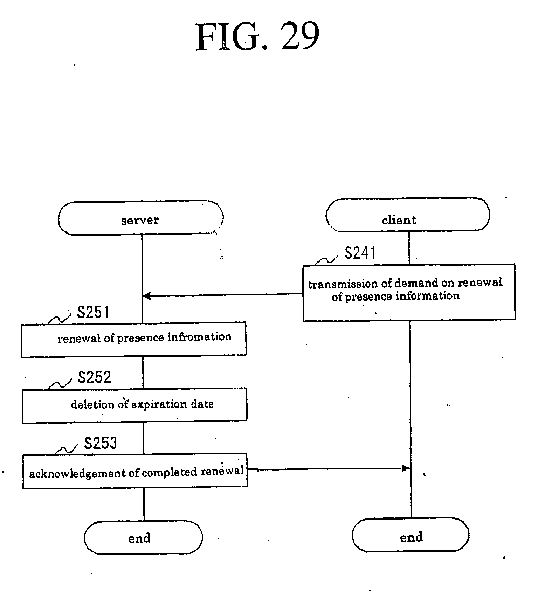

FIG. 29 is a flow chart illustrative of sequential operations of renewing the presence information based on the user's designated presence information.

In step S241, for the purpose of renewing the presence information into the user's designated presence information, the user starts the presence information transmitting unit 250 and designates a new presence information and instructs the presence information transmitting unit 250 to renew the current presence information into the user's designated new presence information. The presence information transmitting unit 250 sends a request for presence renewal, which includes the user's designated new presence information, together with the user's ID to the user information management unit 130 of the server 100 through the network 50.

In step S251, the user information management unit 130 of the server 100 receives this request for presence renewal together with the user's ID, and retrieves a member information, which has the same ID as the received user's ID of the above requester, from the user information storage unit 140, so that the user information management unit 130 changes the existent presence information included in this retrieved member information into the received user's designated new presence information.

In step S252, the user information management unit 130 deletes the effective time period for the existent presence information, which is included in this retrieved member information, whereby the effective time period becomes "none".

In step S523, the user information management unit 130 of the server 100 sends a notice to the effect that the renewal of the presence information has been completed, to the presence information transmitting unit 250 of the client 200.

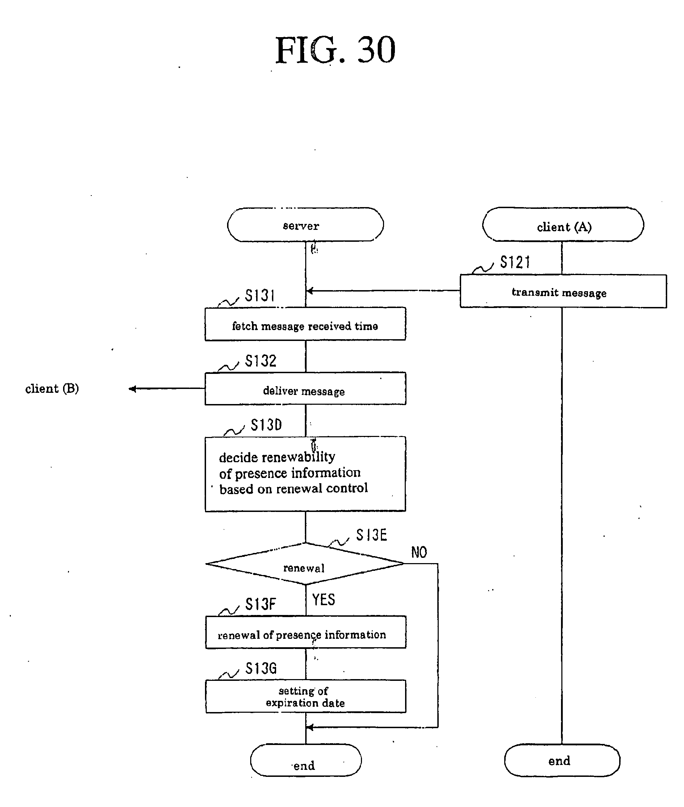

Subsequently, operations of the message system for transmission and receipt of one or more messages between the clients 200 through the server 100 will be described. In this descriptions, a first user, who transmits or sends one or more messages, will be referred to as user "A", and a second user, who is a destination of the message for receiving the message, will be referred to as user "B". FIG 30 is a flow chart illustrative of an example of operations of the message system for transmission and receipt of one or more messages between the clients 200 through the server 100.

In step S121, the user "A" instructs the message transmitting receiving unit 220 of the client 200 to create a message and also designates a user ID of the user "B" as a message destination, and enters a request for transmission of the message into the message transmitting receiving unit 220. Upon receipt of the request for transmission of the message from the user "A", the message transmitting receiving unit 220 adds the message with a transmission header which includes the user ID of the user "B" as the message receiver and the user ID of the user "A" as the message sender. The message transmitting receiving unit 220 sends the message with the transmission header to the message delivery unit 120 in the server 100 through the communication unit 210 and the network 50.

In step S131, the message delivery unit 120 in the server 100 receives the message from the client 200 of the user "A", and fetches a message received time from an internal timer in the server 100 and temporary stores the message with the message received time.

In step S132, the message delivery unit 120 sends the message of the user "A" to the message transmitting receiving unit 220 of the client 200 of the user "B" as the destination, who has the user ID designated by the user "A". The message transmitting receiving unit 220 of the client 200 of the user "B" receives the message of the user "A" and represents or displays the message to the user "B". If the message delivery unit 120 of the server 100 is unable to access to the client 200 of the user "B", then the message delivery unit 120 may optionally send a notice to the effect that any access to the client 200 of the user "B" is not available now. Otherwise, the message delivery unit 120 may repeat re-sending operations of the message to the client 200 of the user "B" predetermined times and only when any access to the client 200 of the user "B" is not yet available, then the message delivery unit 120 may first send a notice to the effect that any access to the client 200 of the user "B" has been available.

In step S13D, the message delivery unit 120 transmits the message receiving time and the user ID of the user "A" as the message sender to the presence information renewal unit 150, so that the presence information renewal unit 150 decides whether or not the renewal of the presence information based on the presence renewal control information stored in the presence renewal control information storage unit 160 is permitted. For example, the presence information renewal unit 150 verifies whether or not any condition has been provided for the renewal of the presence information to be made in response to the message transmission, which is included in the presence renewal control information stored in the presence renewal control information storage unit 160. If no condition is provided or a condition, which is satisfied, is provided, then the presence information renewal unit 150 decides that the renewal of the presence information is permitted. If a condition, which is not satisfied, is provided, then the presence information renewal unit 150 decides that the renewal of the presence information is not permitted. For example, as shown in FIG 27, the renewal to be made in response to the message transmission is provided with the condition that the presence information prior to the renewal is either one of "off-line", "on-line" and "absence". Thus, the presence information renewal unit 150 retrieves a member information having the same user's ID as that of the user "A" from the user information storage unit 140 to confirm the existent presence information included in the retrieved member information. If the existent presence information is either one of "off-line", "on-line" and "absence", then the presence information renewal unit 150 decides that the renewal of the presence information in response to the message transmission is permitted. Otherwise, the presence information renewal unit 150 decides that the renewal of the presence information in response to the message transmission is not permitted.

In step S13E, if the presence information renewal unit 150 decides that the renewal of the presence information in response to the message transmission is not permitted, then no renewal is made and the sequential processes are finished.

In step S13F, if the presence information renewal unit 150 decides that the renewal of the presence information in response to the message transmission is permitted, then the presence information renewal unit 150 renews the presence information of the user "A" as the message sender based on the renewal contents of the presence information included in the presence renewal control information.

In step S13G, the presence information renewal unit 150 decides an effective time period or an expiration time of the just-renewed presence information based on the above-described message received time and also based on an information related to the effective time period, which has been set in the presence renewal control information storage unit 160. The presence information renewal unit 150 sets the decided effective time period or expiration time in the member information.

It is assumed that the presence renewal control information storage unit 160 of the sever 100 has the presence renewal control information as shown in FIG 27. In case that the message is sent by the client 200 of the user "A" at a time "2002/01/13 13:10:30", if the existent presence information of the user "A" is either one of "off-line", "on-line" and "absence", then the presence information renewal unit 150 renews the presence information and its expiration time of the user "A" stored in the user information storage unit 140 into "on-line" and "2002/01/13 13:25:30", respectively.

Renewal operations to the member informations of all the users registered on the user information storage unit 140 of the server 100 are made by the presence information renewal unit 150 of the server 100 similarly to the above-described sequential processes shown in FIG 7. As described above, no effective time period nor expiration time is provided for the user's designated presence information. Thus, with reference again to FIG 7, the presence information is automatically renewed when the effective time period has expired, which had been set for the previously renewed presence information in response to the previous message transmission.

Other operations than what have been described above are identical with the above-described operations in the first embodiment.

As described above, in accordance with the fifth embodiment, the presence information is automatically renewed in response to the message transmission, and also the renewal to the user's designated presence information is permitted. This increases the total kinds of the presence informations.

### SIXTH EMBODIMENT:

A sixth embodiment according to the present invention will be described in detail with reference to the drawings. In the above-described fifth embodiment, no effective time period is provided for the renewed user's designated presence information. In this sixth embodiment, it is permitted to set any effective time period or any expiration time for the user's designated presence information, so that the user's designated presence information will be renewed after the effective time period has expired. This sixth embodiment is different from the last-described fifth embodiment. Namely, the configurations of the message system of this sixth embodiment are identical with the above-described configurations of the message system shown in FIG 26 in the last-described fifth embodiment.

The following descriptions will focus on the differences of the present sixth embodiment from the above-described fifth embodiment.

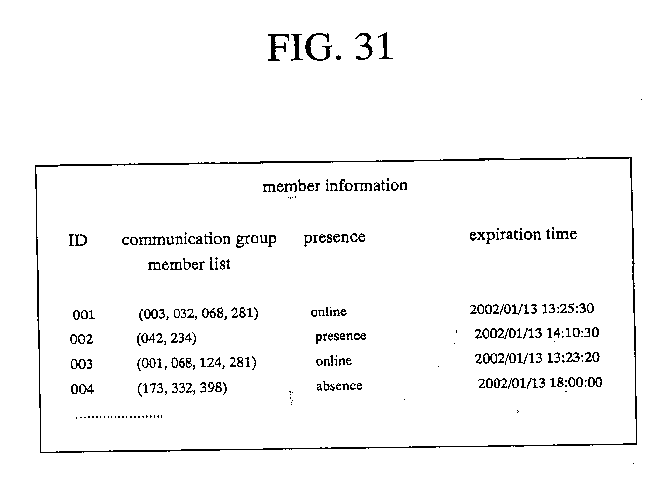

FIG 31 is a view of one example of the member informations stored in the user information storage unit 140. The user information storage unit 140 stores a plurality of user's informations including the presence informations, which will be referred to as member informations in descriptions to be made with reference to FIG 31. Member informations respectively correspond to the respective clients 200 of the plural user's terminal devices 400. Each of the member informations may typically include, but not limited to, an user's identification number (user ID), a communication group member list which designates all of the members, to which this user intends to communicate, a presence information of this user, and an effective time period or an expiration time of the presence information. The presence information is either one of "on-line", "off-line", "absence" and "presence". Respective effective time periods are provided for all of the presence informations "on-line", "off-line", "absence" and "presence".

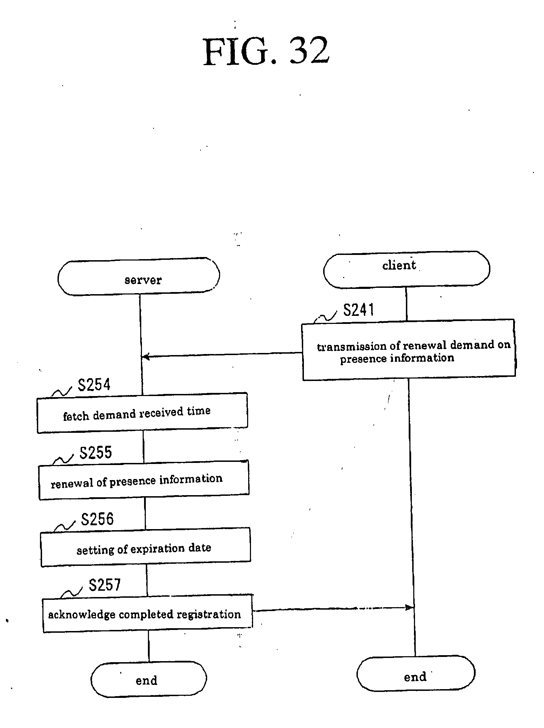

FIG. 32 is a flow chart illustrative of sequential operations of renewing the presence information based on the user's designated presence information.

In step S241, for the purpose of renewing the presence information into the user's designated presence information, the user starts the presence information transmitting unit 250 and designates a new presence information and a new effective time period or a new expiration time for this new presence information, and then the user instructs the presence information transmitting unit 250 to renew the current presence information into the user's designated new presence information and set the new effective time period or the new expiration time for this new presence information. The presence information transmitting unit 250 sends a request for presence renewal, which includes the user's designated new presence information and the new effective time period or the new expiration time, together with the user's ID to the user information management unit 130 of the server 100 through the network 50.

In step S254, the user information management unit 130 of the server 100 receives this request for presence renewal together with the user's ID, and fetches a request received time from an internal timer.

In step S255, the user information management unit 130 retrieves a member information, which has the same ID as the received user's ID of the above requester, from the user information storage unit 140, so that the user information management unit 130 changes the existent presence information included in this retrieved member information into the received user's designated new presence information.

In step S256, the user information management unit 130 sets the user's expiration time or a time defined by adding the user's effective time period to the above fetched request received time.

In step S257, the user information management unit 130 of the server 100 sends a notice to the effect that the renewal of the presence information has been completed, to the presence information transmitting unit 250 of the client 200.

Renewal operations to the member informations of all the users registered on the user information storage unit 140 of the server 100 are made by the presence information renewal unit 150 of the server 100 similarly to the above-described sequential processes shown in FIG 7. As described above, the user's effective time period or the user's expiration time is provided for the user's designated presence information. Thus, with reference again to FIG. 7, the presence information is automatically renewed not only when the effective time period has expired, which had been set for the previously renewed presence information in response to the previous message transmission, but also when the effective time period has expired, which had been set for the previously renewed user's designated presence information in accordance with the user's request. In case that the presence renewal control information shown in FIG 27 has been set in the presence renewal control information storage unit 160, after the effective time period has expired, then the presence information is automatically renewed into "off-line" uniformly.

Other operations than what have been described above are identical with the above-described operations in the first and fifth embodiments.

As described above, in accordance with the sixth embodiment, the presence information is automatically renewed in response to the message transmission, and also the renewal to the user's designated presence information is permitted and further the user's designated effective time period or the user's designated expiration time may be provided for the renewed user's designated presence information.

### SEVENTH EMBODIMENT:

A seventh embodiment according to the present invention will be described in detail with reference to the drawings. The present seventh embodiment is different from the last-mentioned sixth embodiment in view that the user is allowed to further designate any new presence information which becomes effective after the effective time period expired, which had set for the previous user's designated presence information.

The configuration of the message system of the present seventh embodiment is identical with the above-described message systems of the fifth and sixth embodiments and thus is as shown in FIG 26 which had been referred to have described the fifth embodiment.

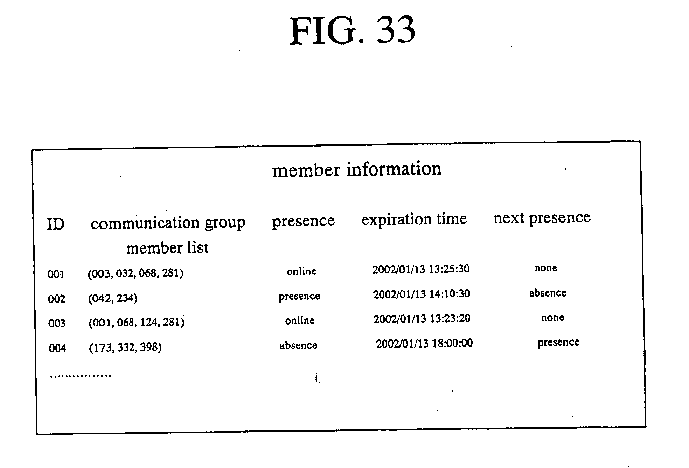

FIG. 33 is a view of one example of the member informations stored in the user information storage unit 140. The user information storage unit 140 stores a plurality of user's informations including the presence informations, which will be referred to as member informations in descriptions to be made with reference to FIG. 33. Member informations respectively correspond to the respective clients 200 of the plural user's terminal devices 400. Each of the member informations may typically include, but not limited to, an user's identification number (user ID), a communication group member list which designates all of the members, to which this user intends to communicate, a presence information of this user, an effective time period or an expiration time of the presence information, and a next-presence information which will become effective just after the effective time period or the expiration time set for the previous presence information. The previous presence information is either one of "on-line", "off-line", "absence" and "presence". Respective effective time periods are provided for all of the presence informations "on-line", "off-line", "absence" and "presence". The user may optionally designate the next-presence information which will become effective just after the effective time period expired which had set for the previously user's designated presence information.

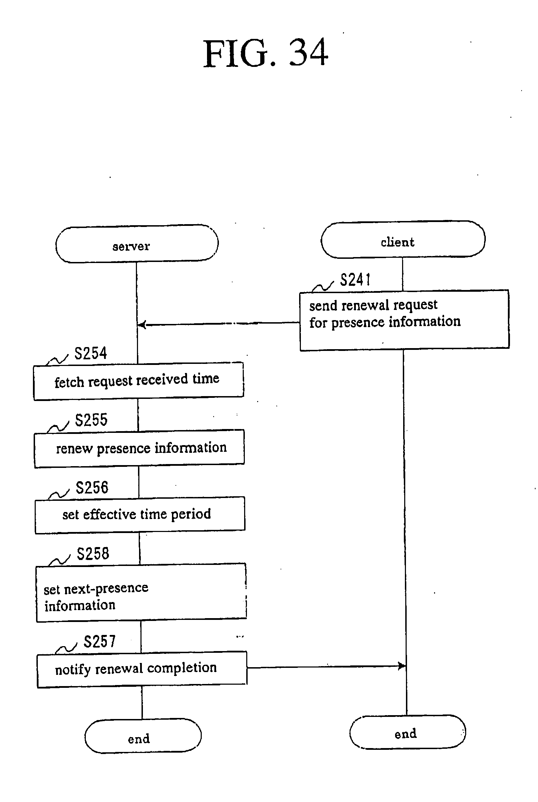

FIG. 34 is a flow chart illustrative of sequential operations of renewing the presence information based on the user's designated presence information.

In step S241, for the purpose of renewing the presence information into the user's designated presence information, the user starts the presence information transmitting unit 250 and designates a new presence information and a new effective time period or a new expiration time for this new presence information, and then the user instructs the presence information transmitting unit 250 to renew the current presence information into the user's designated new presence information and set the new effective time period or the new expiration time for this new presence information. The presence information transmitting unit 250 sends a request for presence renewal, which includes the user's designated new presence information and the new effective time period or the new expiration time, together with the user's ID to the user information management unit 130 of the server 100 through the network 50.

In step S254, the user information management unit 130 of the server 100 receives this request for presence renewal together with the user's ID, and fetches a request received time from an internal timer.

In step S255, the user information management unit 130 retrieves a member information, which has the same ID as the received user's ID of the above requester, from the user information storage unit 140, so that the user information management unit 130 changes the existent presence information included in this retrieved member information into the received user's designated new presence information.

In step S256, the user information management unit 130 sets the user's expiration time or a time defined by adding the user's effective time period to the above fetched request received time.

In step S258, for the purpose of further renewing the previous user's designated presence information as already set in step S256 into a user's designated next presence information, which is to become effective just after the previous user's designated presence information expired, the user designates a further next-presence information and a further next effective time period or expiration time for this next-presence information. The user instructs the presence information transmitting unit 250 to set the user's designated next-presence information and the next-effective time period or expiration time for this next-presence information.

In step S257, the user information management unit 130 of the server 100 sends a notice to the effect that the renewal of the presence information has been completed, to the presence information transmitting unit 250 of the client 200.

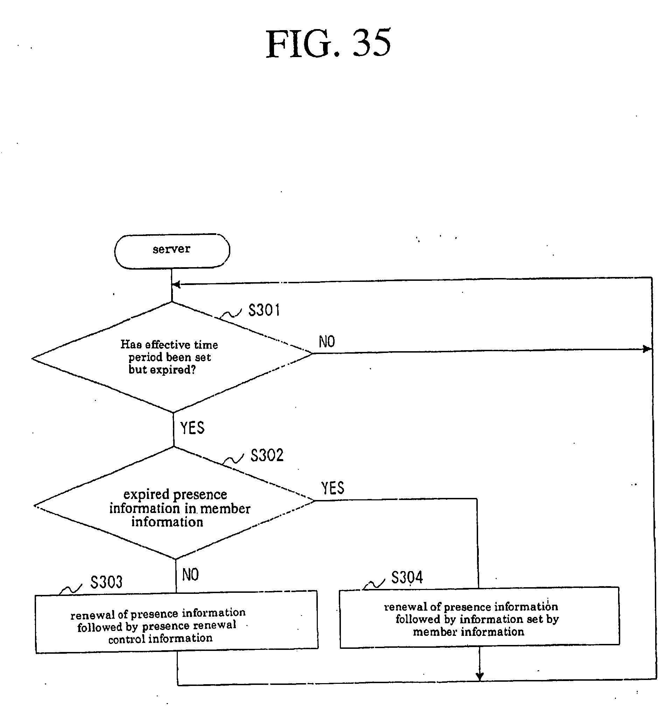

Renewal operations made by the presence information renewal unit 150 of the server 100 to the member informations of all the users registered on the user information storage unit 140 of the server 100 will subsequently be described. FIG. 35 is a flow chart illustrative of renewal operations made by the presence information renewal unit 150 of the server 100 to the member informations of all the users registered on the user information storage unit 140 of the server 100. The presence information renewal unit 150 of the server 100 performs respective renewal operations for respective member informations stored on the user information storage unit 140 separately.

In step S301, the presence information renewal unit 150 verifies whether any effective time period or any expiration time has already been set or not yet for the presence information included in the member information. If the effective time period or the expiration time has already been set, then the presence information renewal unit 150 further verifies whether the effective time period or the expiration time has already expired or not yet.

In step S302, if the effective time period or the expiration time has been set but already expired, then the presence information renewal unit 150 verifies whether in this member information, any next-user's designated presence information has been set nor not, which is to be effective after the effective time period or the expiration time has expired.

In step S303, if any next-user's designated presence information has already been set, then the presence information renewal unit 150 renews the previous user's designated presence information included in this member information in accordance with the next-user's designated presence information included in the presence renewal control information, wherein no further effective time period nor expiration time is set for the next-user's designated presence information.

In step S304, if any next-user's designated presence information has not been set, then the presence information renewal unit 150 renews the previous user's designated presence information included in the member information in accordance with the renewal information previously set by the system administrator or the system manager in the presence renewal control information storage unit 160, wherein no further effective time period nor expiration time is set for the new designated presence information, and the presence information already ineffective due to expiration of the effective time period for this presence information is deleted.

After the presence information renewal unit 150 finished the above-described processes of steps S301, S302, S303 and S304 for the above member information, then with or without a predetermined time interval, the presence information renewal unit 150 will repeat the same sequential processes of steps S301, S302, S303 and S304 for other member informations.

In accordance with this seventh embodiment, the user is allowed to designate not only the effective time period or the expiration time for the user's designated presence information but also the next-new presence information which will become effective just after the last-designated effective time period or expiration time has expired, which had been set for the previous user's designated presence information. For example, if the user will be out for two hours, the user designates a presence information "absence" and also an effective time period "2 hours", and also designates a next-presence information "presence", which will become effective after the effective time period "2 hours" has expired, whereby it is unnecessary for the user to change the presence information when the user returned. This is convenient for the user and a possible reduction to the communication cost may be obtained.

### EIGHTH EMBODIMENT:

An eighth embodiment according to the present invention will be described in detail with reference to the drawings. The present eighth embodiment is different from the above-described sixth embodiment in view that the presence renewal control information storage unit 160 is not provided. No provision of the presence renewal control information storage unit 160 needs that the renewal of the presence information depends on the user's designated presence information which is essential and the user's designated effective time prior or expiration time which is optional.

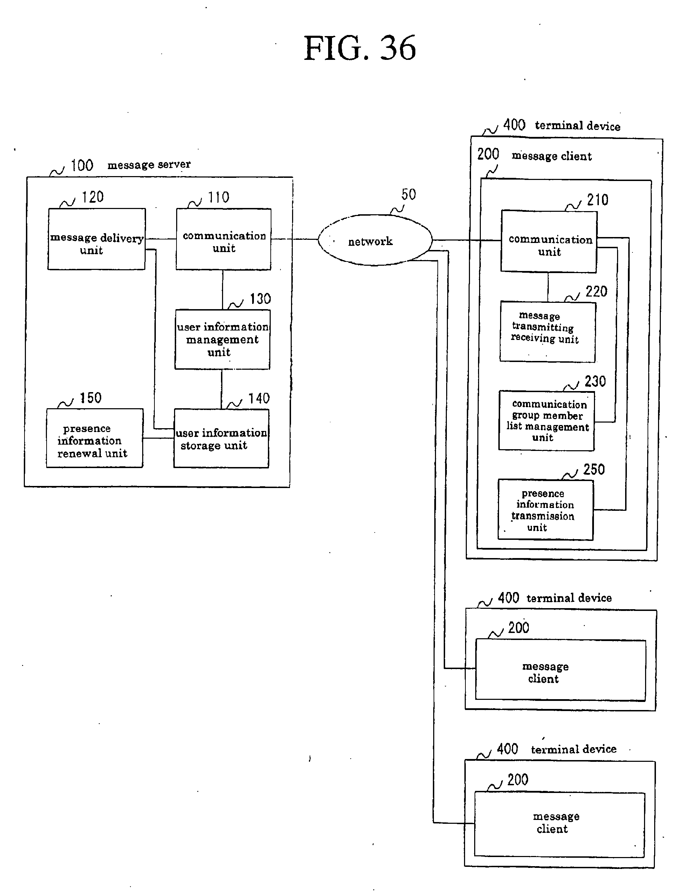

FIG 36 a block diagram illustrative of a schematic configuration of a message system in the eighth embodiment in accordance with the present invention. The message system may include a message server 100, a plurality of terminal devices 400 of users, each of which is functionally and operationally coupled to the message server 100 through a network 50. Each of the plural terminal devices 400 further includes a message client 200. The words "message server" and "message client" will, hereinafter be referred to as "server" and "client", respectively.

The network 50 is to establish communications between the server 100 and the client 200 of each of the plural user's terminal devices 400. The server 100 may typically include, but not limited to, a communication unit 110, a message delivery unit 120, an user information management unit 130, an user information storage unit 140, and a presence information renewal unit 150. The communication unit 110, the message delivery unit 120, the user information management unit 130 and the presence information renewal unit 150 of this second embodiment are identical with the above described units of the first embodiment. Namely, the configuration of the server 100 of this eighth embodiment is different from the server 100 of the above described sixth embodiment in view of no provision of the presence renewal control information storage unit 160.

The client 200 of each of the user's terminal devices 400 enables the user of this terminal device 400 to transmit or receive messages to or from the other users through the above-described server 100, as well as to confirm the respective presence informations of the respective members included in the communication group member list which has previously been stored in the user information storage unit 140.

The each client 200 may include, but not limited to, a communication unit 210, a message transmitting receiving unit 220, a communication group member list management unit 230 and a presence information transmitting unit 250. The communication unit 210, the message transmitting receiving unit 220, the communication group member list management unit 230 and the presence information transmitting unit 250 of this eighth embodiment are identical with the above-described units of the sixth embodiment.

The following descriptions will focus on structural and functional differences of the present eighth embodiment from the above-described sixth embodiment.

The presence information transmitting unit 250 of the client 200 receives designations to presence informations and effective time periods from the user, and sends a request for presence renewal, which includes the designated presence informations and the effective time periods to the server 100 through the communication unit 210 and the network 50. A typical example of the method of designating the presence information may be that some typical examples nominated as the presence information are displayed on a screen of the terminal device 400 for allowing the user to select desired ones of the nominated examples for the presence information. Another typical example of the method of designating the presence information may be that the user enters optional characters, words, phrase or sentence for the presence information. The following descriptions will be made assuming that the user's designated presence information comprises "presence" which means that the user is present in a room, and "absence" which means that the user is absent in the room as well as "in meeting" which means that the user is now attended in the meeting. The presence information, which becomes effective after the effective time period has expired. Notwithstanding, it will be assumed that after the effective time period has expired, then the presence information will automatically be renewed to "presence".

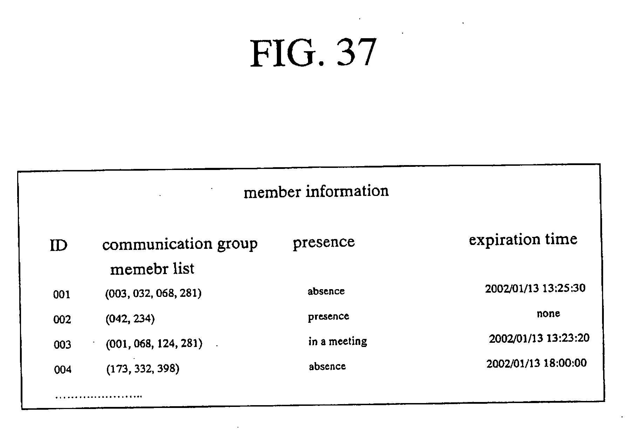

FIG. 37 is a view of one example of the member informations stored in the user information storage unit 140. The user information storage unit 140 stores a plurality of user's informations including the presence informations, which will be referred to as member informations in descriptions to be made with reference to FIG. 37. Member informations respectively correspond to the respective clients 200 of the plural user's terminal devices 400. Each of the member informations may typically include, but not limited to, an user's identification number (user ID), a communication group member list which designates all of the members, to which this user intends to communicate, a presence information of this user, and an effective time period or an expiration time of the presence information. The presence information is either one of "presence", "absence" and "in meeting" which are designated by the user. Respective effective time periods are provided for the presence informations "in meeting", and "absence" but no effective time period nor expiration time is set for the remaining presence information "presence" because after the effective time period for the previous presence information had expired, and thus the presence information has automatically been renewed to "presence".

Sequential operations of renewing the presence information based on the user's designated presence information are identical with the above-described sequential operations with reference to FIG 32 in the above sixth embodiment. The sequential operations will be described with reference gain to FIG. 32.

In step S241, for the purpose of renewing the presence information into the user's designated presence information, the user starts the presence information transmitting unit 250 and designates a new presence information and a new effective time period or a new expiration time for this new presence information, and then the user instructs the presence information transmitting unit 250 to renew the current presence information into the user's designated new presence information and set the new effective time period or the new expiration time for this new presence information. The presence information transmitting unit 250 sends a request for presence renewal, which includes the user's designated new presence information and the new effective time period or the new expiration time, together with the user's ID to the user information management unit 130 of the server 100 through the network 50.

In step S254, the user information management unit 130 of the server 100 receives this request for presence renewal together with the user's ID, and fetches a request received time from an internal timer.

In step S255, the user information management unit 130 retrieves a member information, which has the same ID as the received user's ID of the above requester, from the user information storage unit 140, so that the user information management unit 130 changes the existent presence information included in this retrieved member information into the received user's designated new presence information.

In step S256, the user information management unit 130 sets the user's expiration time or a time defined by adding the user's effective time period to the above fetched request received time.

In step S257, the user information management unit 130 of the server 100 sends a notice to the effect that the renewal of the presence information has been completed, to the presence information transmitting unit 250 of the client 200.

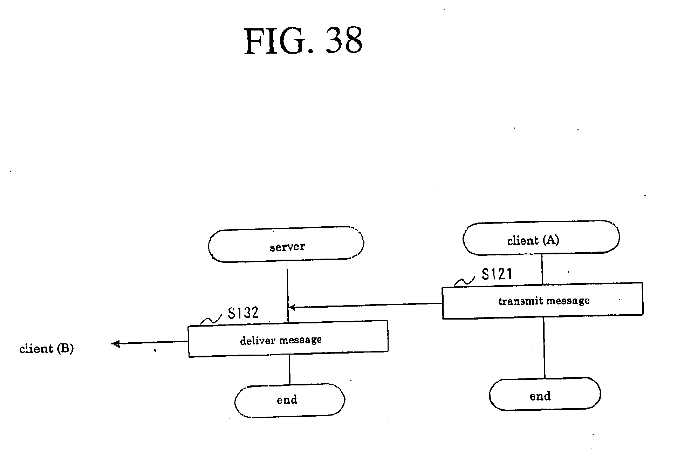

Subsequently, operations of the message system for transmission and receipt of one or more messages between the clients 200 through the server 100 will be described. In this descriptions, a first user, who transmits or sends one or more messages, will be referred to as user "A", and a second user, who is a destination of the message for receiving the message, will be referred to as user "B". FIG. 38 is a flow chart illustrative of an example of operations of the message system for transmission and receipt of one or more messages between the clients 200 through the server 100.

In step S121, the user "A" instructs the message transmitting receiving unit 220 of the client 200 to create a message and also designates a user ID of the user "B" as a message destination, and enters a request for transmission of the message into the message transmitting receiving unit 220. Upon receipt of the request for transmission of the message from the user "A", the message transmitting receiving unit 220 adds the message with a transmission header, which includes the user ID of the user "B" as the message receiver and the user ID of the user "A" as the message sender. The message transmitting receiving unit 220 sends the message with the transmission header to the message delivery unit 120 in the server 100 through the communication unit 210 and the network 50.

In step S132, upon receipt of the message of the user "A" from the client 200, the message delivery unit 120 sends the received message of the user "A" to the message transmitting receiving unit 220 of the client 200 of the user "B" as the destination, who has the user ID designated by the user "A". The message transmitting receiving unit 220 of the client 200 of the user "B" receives the message of the user "A" and represents or displays the message to the user "B". If the message delivery unit 120 of the server 100 is unable to access to the client 200 of the user "B", then the message delivery unit 120 may optionally send a notice to the effect that any access to the client 200 of the user "B" is not available now. Otherwise, the message delivery unit 120 may repeat re-sending operations of the message to the client 200 of the user "B" predetermined times and only when any access to the client 200 of the user "B" is not yet available, then the message delivery unit 120 may first send a notice to the effect that any access to the client 200 of the user "B" has been available.

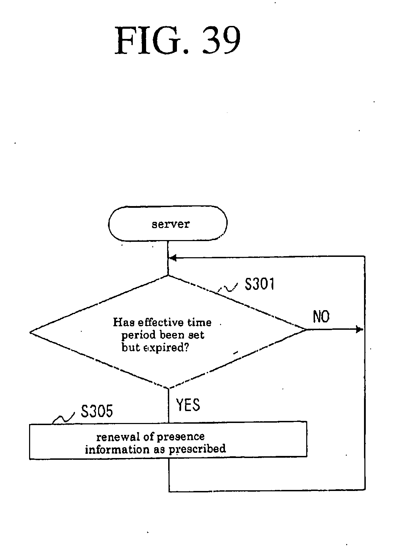

Renewal operations made by the presence information renewal unit 150 of the server 100 to the member informations of all the users registered on the user information storage unit 140 of the server 100 will subsequently be described. FIG. 39 is a flow chart illustrative of renewal operations made by the presence information renewal unit 150 of the server 100 to the member informations of all the users registered on the user information storage unit 140 of the server 100. The presence information renewal unit 150 of the server 100 performs respective renewal operations for respective member informations stored on the user information storage unit 140 separately.

In step S301, the presence information renewal unit 150 verifies whether any effective time period or any expiration time has already been set or not yet for the presence information included in the member information. If the effective time period or the expiration time has already been set, then the presence information renewal unit 150 further verifies whether the effective time period or the expiration time has already expired or not yet.

In step S305, if the effective time period or the expiration time has been set but already expired, then the presence information renewal unit 150 renews the presence information included in the member information into the previously designated presence information "presence". At the same time, the presence information renewal unit 150 sets "none" for the effective time period for the just-renewed presence information.

After the presence information renewal unit 150 finished the above-described processes of steps S301 and S305 for the above member information, then with or without a predetermined time interval, the presence information renewal unit 150 will repeat the same sequential processes of steps S301 and S305 for other member informations.

As describe above, in accordance with the present embodiment, the user is allowed to designate the effective time period or the expiration time for the user's designated presence information, so that after the user's designated time period or expiration time has expired, then the user's designated presence information will automatically be renewed to the previously set presence information. For example, if the user will attend to the meeting for two hours, the user designates a presence information "in meeting" and also an effective time period "2 hours", so that after 2 hours passed, then the user will be released from the meeting and the user's designated presence information "in meeting" will automatically be renewed to "presence". It is unnecessary for the user to change the presence information when the user returned from the meeting. This is convenient for the user and a possible reduction to the communication cost may be obtained.

### NINTH EMBODIMENT:

A ninth embodiment according to the present invention will be described in detail with reference to the drawings. The present ninth embodiment is different from the above-described eighth embodiment in view that the user is allowed to designate a next user's designated presence information which becomes effective after the user's designated effective time period or expiration time has expired, which had set for the previous user's designated presence information.

The configuration of the message system of this ninth embodiment is identical with the configuration of the message system last-described with reference to FIG. 36 in the above eighth embodiment.

The message system may include a message server 100, a plurality of terminal devices 400 of users, each of which is functionally and operationally coupled to the message server 100 through a network 50. Each of the plural terminal devices 400 further includes a message client 200. The words "message server" and "message client" will, hereinafter be referred to as "server" and "client", respectively.

The network 50 is to establish communications between the server 100 and the client 200 of each of the plural user's terminal devices 400. The server 100 may typically include, but not limited to, a communication unit 110, a message delivery unit 120, an user information management unit 130, an user information storage unit 140, and a presence information renewal unit 150. The communication unit 110, the message delivery unit 120, the user information management unit 130 and the presence information renewal unit 150 of this second embodiment are identical with the above described units of the first embodiment. Namely, the configuration of the server 100 of this eighth embodiment is different from the server 100 of the above described sixth embodiment in view of no provision of the presence renewal control information storage unit 160.

The client 200 of each of the user's terminal devices 400 enables the user of this terminal device 400 to transmit or receive messages to or from the other users through the above-described server 100, as well as to confirm the respective presence informations of the respective members included in the communication group member list which has previously been stored in the user information storage unit 140.

The each client 200 may include, but not limited to, a communication unit 210, a message transmitting receiving unit 220, a communication group member list management unit 230 and a presence information transmitting unit 250. The communication unit 210, the message transmitting receiving unit 220, the communication group member list management unit 230 and the presence information transmitting unit 250 of this eighth embodiment are identical with the above-described units of the sixth embodiment.

The following descriptions will focus on structural and functional differences of the present eighth embodiment from the above-described sixth embodiment.

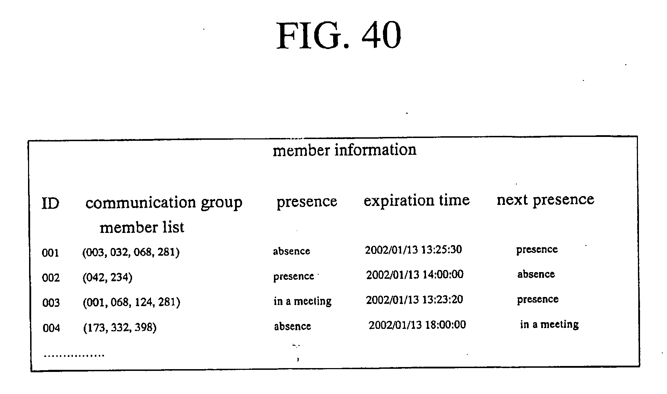

FIG 40 is a view of one example of the member informations stored in the user information storage unit 140. The user information storage unit 140 stores a plurality of user's informations including the presence informations, which will be referred to as member informations in descriptions to be made with reference to FIG 40. Member informations respectively correspond to the respective clients 200 of the plural user's terminal devices 400. Each of the member informations may typically include, but not limited to, an user's identification number (user ID), a communication group member list which designates all of the members, to which this user intends to communicate, a user's designated presence information of this user, an effective time period or an expiration time of the presence information, and a next-user's designated presence information which will become effective after the effective time period or expiration time for the user's designated presence information had expired. The presence information is either one of "presence", "absence" and "in meeting" which are designated by the user. Respective effective time periods are provided for all the presence informations "in meeting", "presence" and "absence".

Sequential operations of renewing the presence information based on the user's designated presence information are identical with the above-described sequential operations shown in FIG 34 in the above seventh embodiment.

In step S241, for the purpose of renewing the presence information into the user's designated presence information, the user starts the presence information transmitting unit 250 and designates a new presence information and a new effective time period or a new expiration time for this new presence information, and then the user instructs the presence information transmitting unit 250 to renew the current presence information into the user's designated new presence information and set the new effective time period or the new expiration time for this new presence information. The presence information transmitting unit 250 sends a request for presence renewal, which includes the user's designated new presence information and the new effective time period or the new expiration time, together with the user's ID to the user information management unit 130 of the server 100 through the network 50.

In step S254, the user information management unit 130 of the server 100 receives this request for presence renewal together with the user's ID, and fetches a request received time from an internal timer.

In step S255, the user information management unit 130 retrieves a member information, which has the same ID as the received user's ID of the above requester, from the user information storage unit 140, so that the user information management unit 130 changes the existent presence information included in this retrieved member information into the received user's designated new presence information.

In step S256, the user information management unit 130 sets the user's expiration time or a time defined by adding the user's effective time period to the above fetched request received time.

In step S258, for the purpose of further renewing the previous user's designated presence information as already set in step S256 into a user's designated next presence information, which is to become effective just after the previous user's designated presence information expired, the user designates a further next-presence information and a further next effective time period or expiration time for this next-presence information. The user instructs the presence information transmitting unit 250 to set the user's designated next-presence information and the next-effective time period or expiration time for this next-presence information.

In step S257, the user information management unit 130 of the server 100 sends a notice to the effect that the renewal of the presence information has been completed, to the presence information transmitting unit 250 of the client 200.

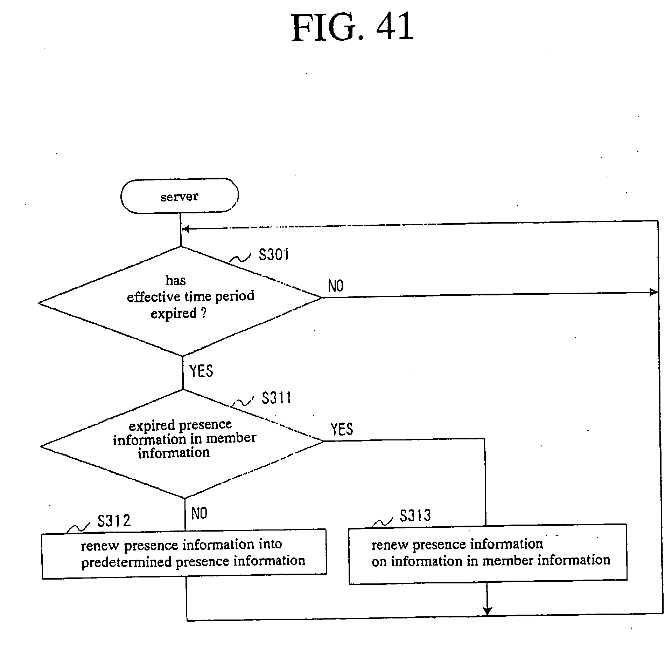

Renewal operations made by the presence information renewal unit 150 of the server 100 to the member informations of all the users registered on the user information storage unit 140 of the server 100 will subsequently be described. FIG 41 is a flow chart illustrative of renewal operations made by the presence information renewal unit 150 of the server 100 to the member informations of all the users registered on the user information storage unit 140 of the server 100. The presence information renewal unit 150 of the server 100 performs respective renewal operations for respective member informations stored on the user information storage unit 140 separately.

In step S301, the presence information renewal unit 150 verifies whether any effective time period or any expiration time has already been set or not yet for the presence information included in the member information. If the effective time period or the expiration time has already been set, then the presence information renewal unit 150 further verifies whether the effective time period or the expiration time has already expired or not yet.

In step S311, if the effective time period or the expiration time has been set but already expired, then the presence information renewal unit 150 verifies whether in this member information, any next-user's designated presence information has been set nor not, which is to be effective after the effective time period or the expiration time has expired.

In step S312, if any next-user's designated presence information has not been set, then the presence information renewal unit 150 renews the previous user's designated presence information included in the member information into the predetermined presence information "presence", wherein no further effective time period nor expiration time is set for the predetermined presence information "presence".

In step S313, if any next-user's designated presence information has already been set, then the presence information renewal unit 150 renews the previous user's designated presence information included in this member information in accordance with the next-user's designated presence information included in the presence renewal control information, wherein no further effective time period nor expiration time is set for the next-user's designated presence information, and further the previous user's designated presence information already ineffective due to the expiration of the effective time period is deleted.

After the presence information renewal unit 150 finished the above-described processes of steps S301, S311, S312 and S313 for the above member information, then with or without a predetermined time interval, the presence information renewal unit 150 will repeat the same sequential processes of steps S301, S311, S312 and S313 for other member informations.

In accordance with this ninth embodiment, the user is allowed to designate not only the effective time period or the expiration time for the user's designated presence information but also the next-new presence information which will become effective just after the last-designated effective time period or expiration time has expired, which had been set for the previous user's designated presence information. For example, if the user will attend to the meeting for two hours and then be out, the user designates a presence information "in meeting" and also an effective time period "2 hours" for this presence information "in meeting", and also designates a next-presence information "absence", which will become effective after the effective time period "2 hours" has expired, whereby it is unnecessary for the user to change the presence information when the user is released from the meeting and go to out. This is convenient for the user and a possible reduction to the communication cost may be obtained.

### TENTH EMBODIMENT:

A tenth embodiment according to the present invention will be described in detail with reference to the drawings. In the foregoing embodiments, for example, the first to ninth embodiments, the message system offers the uniform services to all of the users. It is possible that some of the users may accept for the conventional services, while others desires the improved services provided by this message system.

The present tenth embodiment selectively offers the improved servers to some users who desire the improved services but also offers the conventional services to other users who desire the conventional services. The user information storage unit 140 further stores an additional information relating to user's attributes or user's properties set for respective terminal devices 400. Typical examples of the user's attributes or user's properties may include, but not limited, to "X" which means that the user desires the improved message service for obtaining a possible reduction of the communication cost, and "Y" which means that the user desires the conventional message service due to no need to the reduction of the communication cost. These user's attributes or user's properties may be designated by the user or obtained from the terminal device 400.

The server 100 verifies the user's attributes or user's properties belonging to the respective terminal devices 400 and select either one of the improved and conventional message services based on the user's attributes or user's properties. For example, if the server 100 verifies the user's property "X", then the server 100 offers the improved message service to the user. If the server 100 verifies the user's property "Y", then the server 100 offers the conventional message service to the user.

### MODIFICATIONS :

Although the invention has been described above in connection with several preferred embodiments therefor, it will be appreciated that those embodiments have been provided solely for illustrating the invention, and not in a limiting sense. Numerous modifications and substitutions of equivalent materials and techniques will be readily apparent to those skilled in the art after reading the present application, and all such modifications and substitutions are expressly understood to fall within the true scope and spirit of the appended claims.

It might be possible to modify each of the third through ninth embodiments, so that the presence renewal control informations are respectively unique to respective users similarly to the second embodiment.

It might be possible to modify the fourth embodiment, so that plural different types of presence renewal control informations are provided for not only the message but also the other communication of different types from the message, such as the telephone communication and the Internet communication.

It might be possible to modify each of the fifth through seventh embodiments, so that the renewal of the presence information is automatically renewed in response to the telephone call and the Internet access similarly to the third to fourth embodiments.

## Claims

1. A message server including :
a message delivery unit for delivering a message between terminals of users ;
a user-related information storage unit for storing each presence information of each terminal of each user and each communication group member list belonging to said each user ;
a user-related information management unit for notifying a presence information of at least one member, who is listed on said each communication group member list, to said each terminal of said each user ; and
a presence information renewal unit for renewing a presence information, which belongs to a terminal of a user as sender who sends a message to said message server, and which is stored in said user-related information storage unit,
wherein said presence information renewal unit renews said presence information automatically in response to at least one of a first type event that said message server has received at least one of said message and any other communication from said user as sender, and a second type event that an effective time period for said presence information has expired.

2. The message server as claimed in claim 1, wherein said user-related information management unit further renews a presence information of a terminal of a user as renewal requester who has sent a request for renewal of said presence information in response to receipt of said request for renewal from said user as renewal requester.

3. The message server as claimed in claim 2, wherein said user-related information management unit furthermore sets an effective time period for said presence information as renewed by said user-related information management unit, so that said presence information, as once renewed, is further renewed when said effective time period has expired.

4. The message server as claimed in claim 3, wherein said user-related information management unit receives said effective time period together with said request for renewal from said terminal of said user as renewal requester.

5. The message server as claimed in claim 3, wherein said user-related information management unit receives next-renewal contents of said presence information in addition to said request for renewal from said user as renewal requester, where said next-renewal contents are to be used for a next-renewal to be made in response to said second type event based on said next-renewal contents subsequent to a currently requested renewal by said request for renewal.

6. The message server as claimed in claim 3, further including :
a presence renewal control information storage unit for storing : renewal contents for renewing a presence information based on said renewal contents in response to said first type event ; said effective time period for said presence information as renewed ; and next-renewal contents for renewing said presence information, as once renewed, in response to said second type event,
wherein said renewal contents, said effective time period, and said next-renewal contents are common to said terminals of all said users.

7. The message server as claimed in claim 3, wherein said user-related information storage unit stores renewal contents for renewing a presence information based on said renewal contents in response to said first type event; said effective time period for said presence information as renewed ; and next-renewal contents for renewing said presence information, as once renewed, in response to said second type event,
wherein said renewal contents, said effective time period, and said next-renewal contents are unique to each of said terminals of all said users.

8. The message server as claimed in claim 2, wherein said user-related information management unit does not set any effective time period for a presence information as renewed by said user-related information management unit based on said request for renewal from said user as renewal requester.

9. The message server as claimed in claim 2, wherein said user-related information management unit sets an effective time period for a presence information as renewed by said user-related information management unit based on said request for renewal from said user as renewal requester, and where said effective time period is designated by said request for renewal.

10. The message server as claimed in claim 2, wherein said user-related information management unit sets an effective time period for a presence information as renewed by said user-related information management unit based on said request for renewal from said user as renewal requester, and where said effective time period is designated by said request for renewal, and said user-related information management unit further sets next-renewal contents for further renewing said presence information as renewed based on said next-renewal contents at said second time when said effective time period as set for said presence information as renewed has expired.

11. The message server as claimed in claim 1, wherein said any other communication from said user as sender includes at least one of a first type access from a telephone device to said message server and a second type access from a Web-browser to said message server.

12. The message server as claimed in claim 11, further including :
a first presence renewal control information storage unit for storing a first presence renewal control information to be used for renewing a presence information in response to said first type event that said server receives said message;
a second presence renewal control information storage unit for storing a second presence renewal control information to be used for renewing said presence information in response to said first type event that said server receives said first type access from said telephone device ; and
a third presence renewal control information storage unit for storing a third presence renewal control information to be used for renewing said presence information in response to said first type event that said server receives said second type access from said Web-browser.

13. The message server as claimed in claim 1, wherein said user-related information storage unit further stores each terminal property information of each of said terminals, and said each terminal property information designates either one of a first property that said presence information renewal unit should renew said presence information of said each terminal, and a second property that said presence information renewal unit should not renew said presence information of said each terminal, and
so that said presence information renewal unit renews said presence information of said each terminal only when said each terminal property information designates said first property.

14. A message system including :
a message server ; and
a plurality of terminals of users, each of said plurality of terminals being accessible to said message server through at least a network, and each of said plurality of terminals including a message client,
said message server further includes :
a message delivery unit for delivering a message between said terminals ;
a user-related information storage unit for storing each presence information of each terminal of each user and each communication group member list belonging to said each user ;
a user-related information management unit for notifying a presence information of at least one member, who is listed on said each communication group member list, to said each terminal of said each user ; and
a presence information renewal unit for renewing a presence information, which belongs to a terminal of a user as sender who sends a message to said message server, and which is stored in said user-related information storage unit,
wherein said presence information renewal unit renews said presence information automatically in response to at least one of a first type event that said message server has received at least one of said message and any other communication from said user as sender, and a second type event that an effective time period for said presence information has expired.

15. The message system as claimed in claim 14, wherein said user-related information management unit further renews a presence information of a terminal of a user as renewal requester who has sent a request for renewal of said presence information in response to receipt of said request for renewal from said user as renewal requester.

16. The message system as claimed in claim 15, wherein said user-related information management unit furthermore sets an effective time period for said presence information as renewed by said user-related information management unit, so that said presence information, as once renewed, is further renewed when said effective time period has expired.

17. The message system as claimed in claim 16, wherein said user-related information management unit receives said effective time period together with said request for renewal from said terminal of said user as renewal requester.

18. The message system as claimed in claim 16, wherein said user-related information management unit receives next-renewal contents of said presence information in addition to said request for renewal from said user as renewal requester, where said next-renewal contents are to be used for a next-renewal to be made in response to said second type event based on said next-renewal contents subsequent to a currently requested renewal by said request for renewal.

19. The message system as claimed in claim 16, further including :
a presence renewal control information storage unit for storing : renewal contents for renewing a presence information based on said renewal contents in response to said first type event ; said effective time period for said presence information as renewed ; and next-renewal contents for renewing said presence information as once renewed, in response to said second type event,
wherein said renewal contents, said effective time period, and said next-renewal contents are common to said terminals of all said users.

20. The message system as claimed in claim 16, wherein said user-related information storage unit stores renewal contents for renewing a presence information based on said renewal contents in response to said first type event; said effective time period for said presence information as renewed ; and next-renewal contents for renewing said presence information, as once renewed, in response to said second type event,
wherein said renewal contents, said effective time period, and said next-renewal contents are unique to each of said terminals of all said users.

21. The message system as claimed in claim 15, wherein said user-related information management unit does not set any effective time period for a presence information as renewed by said user-related information management unit based on said request for renewal from said user as renewal requester.

22. The message system as claimed in claim 15, wherein said user-related information management unit sets an effective time period for a presence information as renewed by said user-related information management unit based on said request for renewal from said user as renewal requester, and where said effective time period is designated by said request for renewal.

23. The message system as claimed in claim 15, wherein said user-related information management unit sets an effective time period for a presence information as renewed by said user-related information management unit based on said request for renewal from said user as renewal requester, and where said effective time period is designated by said request for renewal, and said user-related information management unit further sets next-renewal contents for further renewing said presence information as renewed based on said next-renewal contents at said second time when said effective time period as set for said presence information as renewed has expired.

24. The message system as claimed in claim 14, wherein said any other communication from said user as sender includes at least one of a first type access from a telephone device to said message server and a second type access from a Web-browser to said message server.

25. The message system as claimed in claim 14, wherein said user-related information storage unit further stores each terminal property information of each of said terminals, and said each terminal property information designates either one of a first property that said presence information renewal unit should renew said presence information of said each terminal, and a second property that said presence information renewal unit should not renew said presence information of said each terminal, and
so that said presence information renewal unit renews said presence information of said each terminal only when said each terminal property information designates said first property.

26. The message system as claimed in claim 14, wherein each of said message clients includes :
a message transmitting receiving unit for transmitting said message to said message server and receiving another message from said message server; and
a communication group member list management unit for sending said message server said communication group member list together with a request for storing said communication group member list into said user-related information storage unit,
so that said user-related information storage unit stores said communication group member list based on said request by said communication group member list management unit.

27. The message system as claimed in claim 26, wherein each of said message client further includes :
a presence renewal control information registration unit for sending each presence renewal control information, which is unique to each user together with a request for registration of said each presence renewal control information, to said user-related information management unit of said message server, so that said user information management unit registers said each presence renewal control information in said message server, based on said request for registration of said each presence renewal control information.

28. The message system as claimed in claim 14, wherein each of said plurality of terminals further includes :
a telephone device being accessible to said message server ; and
a Web browser being accessible to said message server, and
wherein said any other communication from said user as sender includes at least one of a first type access from said telephone device to said message server and a second type access from said Web-browser to said message server.

29. The message system as claimed in claim 28, wherein said message server further includes :
a first presence renewal control information storage unit for storing a first presence renewal control information to be used for renewing a presence information in response to said first type event that said server receives said message;
a second presence renewal control information storage unit for storing a second presence renewal control information to be used for renewing said presence information in response to said first type event that said server receives said first type access from said telephone device ; and
a third presence renewal control information storage unit for storing a third presence renewal control information to be used for renewing said presence information in response to said first type event that said server receives said second type access from said Web-browser.

30. The message system as claimed in claim 29, wherein each of said plurality of terminals further includes :
a terminal device identification information storing unit for storing a terminal device identification information which designates either one of a first identifier that said presence information of said each terminal should be renewed, and a second identifier that said presence information of said each terminal should not be renewed, and
so that said presence information renewal unit receives said terminal device identification information and renews said presence information of said each terminal only when said each terminal property information designates said first identifier.

31. A method of management of a presence information by a message server, said method including :
notifying a presence information of at least one member listed on each communication group member list belonging to each user ; and
renewing a presence information, which belongs to a terminal of a user as sender who sends a message to said message server,
wherein said presence information is automatically renewed in response to at least one of a first type event that said message server has received at least one of said message and any other communication from said user as sender, and a second type event that an effective time period for said presence information has expired.

32. The method as claimed in claim 31, wherein a presence information of a terminal of a user as renewal requester, who has sent a request for renewal of said presence information, is further renewed upon receipt of said request for renewal from said user as renewal requester.

33. The method as claimed in claim 32, wherein an effective time period is furthermore set for said presence information as renewed, so that said presence information, as once renewed, is further renewed when said effective time period has expired.

34. The method as claimed in claim 33, wherein said message server receives said effective time period together with said request for renewal from said user as renewal requester.

35. The method as claimed in claim 33, wherein said message server receives next-renewal contents of said presence information in addition to said request for renewal from said user as renewal requester, where said next-renewal contents are to be used for a next-renewal to be made in response to said second type event based on said next-renewal contents subsequent to a currently requested renewal by said request for renewal.

36. The method as claimed in claim 33, further including :
storing : renewal contents for renewing a presence information based on said renewal contents in response to said first type event ; said effective time period for said presence information as renewed ; and next-renewal contents for renewing said presence information, as once renewed, in response to said second type event,
wherein said renewal contents, said effective time period, and said next-renewal contents are common to all said users.

37. The method as claimed in claim 33, further including :
storing : renewal contents for renewing a presence information based on said renewal contents in response to said first type event ; said effective time period for said presence information as renewed ; and next-renewal contents for renewing said presence information, as once renewed, in response to said second type event,
wherein said renewal contents, said effective time period, and said next-renewal contents are unique to each of all said users.

38. The method as claimed in claim 32, wherein any effective time period is not set for a presence information as renewed based on said request for renewal from said user as renewal requester.

39. The method as claimed in claim 32, wherein an effective time period is set for a presence information as renewed based on said request for renewal from said user as renewal requester, and where said effective time period is designated by said request for renewal.

40. The method as claimed in claim 32, wherein an effective time period is set for a presence information as renewed based on said request for renewal from said user as renewal requester, and where said effective time period is designated by said request for renewal, and next-renewal contents are further set for further renewing said presence information as renewed based on said next-renewal contents at said second time when said effective time period as set for said presence information as renewed has expired.

41. The method as claimed in claim 31, wherein said any other communication from said user as sender includes at least one of a first type access from a telephone device to said message server and a second type access from a Web-browser to said message server.

42. The method as claimed in claim 41, further including :
storing a first presence renewal control information to 'be used for renewing a presence information in response to said first type event that said server receives said message ;
storing a second presence renewal control information to be used for renewing said presence information in response to said first type event that said server receives said first type access from said telephone device ; and
storing a third presence renewal control information to be used for renewing said presence information in response to said first type event that said server receives said second type access from said Web-browser.

43. The method as claimed in claim 31, further including :
storing each terminal property information of each of said terminals, and said each terminal property information designating either one of a first property that said presence information of said each terminal should be renewed, and a second property that said presence information of said each terminal should not be renewed, and
so that said presence information of said each terminal is renewed only when said each terminal property information designates said first property.

44. An apparatus for management of a presence information including :
a user-related information management unit for notifying a presence information of at least one member listed on each communication group member list belonging to each user ; and
a presence information renewal unit for renewing a presence information, which belongs to a terminal of a user as sender who sends a message to said message server, and which is stored in said user-related information storage unit,
wherein said presence information renewal unit renews said presence information automatically in response to at least one of a first type event that said message server has received at least one of said message and any other communication from said user as sender, and a second type event that an effective time period for said presence information has expired.

45. The apparatus as claimed in claim 44, wherein said user-related information management unit further renews a presence information of a terminal of a user as renewal requester who has sent a request for renewal of said presence information in response to receipt of said request for renewal from said user as renewal requester.

46. The apparatus as claimed in claim 45, wherein said user-related information management unit furthermore sets an effective time period for said presence information as renewed by said user-related information management unit, so that said presence information, as once renewed, is further renewed when said effective time period has expired.

47. The apparatus as claimed in claim 46, wherein said user-related information management unit receives said effective time period together with said request for renewal from said terminal of said user as renewal requester.

48. The apparatus as claimed in claim 46, wherein said user-related information management unit receives next-renewal contents of said presence information in addition to said request for renewal from said user as renewal requester, where said next-renewal contents are to be used for a next-renewal to be made in response to said second type event based on said next-renewal contents subsequent to a currently requested renewal by said request for renewal.

49. The apparatus as claimed in claim 46, further including :
a presence renewal control information storage unit for storing :
renewal contents for renewing a presence information based on said renewal contents in response to said first type event ; said effective time period for said presence information as renewed ; and next-renewal contents for renewing said presence information, as once renewed, in response to said second type event,
wherein said renewal contents, said effective time period, and said next-renewal contents are common to said terminals of all said users.

50. The apparatus as claimed in claim 46, wherein said user-related information storage unit stores renewal contents for renewing a presence information based on said renewal contents in response to said first type event; said effective time period for said presence information as renewed ; and next-renewal contents for renewing said presence information, as once renewed, in response to said second type event,
wherein said renewal contents, said effective time period, and said next-renewal contents are unique to each of said terminals of all said users.

51. The apparatus as claimed in claim 45, wherein said user-related information management unit does not set any effective time period for a presence information as renewed by said user-related information management unit based on said request for renewal from said user as renewal requester.

52. The apparatus as claimed in claim 45, wherein said user-related information management unit sets an effective time period for a presence information as renewed by said user-related information management unit based on said request for renewal from said user as renewal requester, and where said effective time period is designated by said request for renewal.

53. The apparatus as claimed in claim 45, wherein said user-related information management unit sets an effective time period for a presence information as renewed by said user-related information management unit based on said request for renewal from said user as renewal requester, and where said effective time period is designated by said request for renewal, and said user-related information management unit further sets next-renewal contents for further renewing said presence information as renewed based on said next-renewal contents at said second time when said effective time period as set for said presence information as renewed has expired.

54. The apparatus as claimed in claim 44, wherein said any other communication from said user as sender includes at least one of a first type access from a telephone device to said message server and a second type access from a Web-browser to said message server.

55. The message server as claimed in claim 54, further including :
a first presence renewal control information storage unit for storing a first presence renewal control information to be used for renewing a presence information in response to said first type event that said server receives said message;
a second presence renewal control information storage unit for storing a second presence renewal control information to be used for renewing said presence information in response to said first type event that said server receives said first type access from said telephone device ; and
a third presence renewal control information storage unit for storing a third presence renewal control information to be used for renewing said presence information in response to said first type event that said server receives said second type access from said Web-browser.

56. The message server as claimed in claim 44, wherein said user-related information storage unit further stores each terminal property information of each of said terminals, and said each terminal property information designates either one of a first property that said presence information renewal unit should renew said presence information of said each terminal, and a second property that said presence information renewal unit should not renew said presence information of said each terminal, and
so that said presence information renewal unit renews said presence information of said each terminal only when said each terminal property information designates said first property.
